# EUROPÄISCHE PATENTSCHRIFT

(11) **EP 2 721 076 B1**
(45) Veröffentlichungstag und Bekanntmachung des Hinweises auf die Patenterteilung: **29.07.2015**
(21) Anmeldenummer: 12729496.5
(22) Anmeldetag: 15.06.2012
(51) Int. Cl.: C08F 2/48, C09D 4/00, C09J 7/04

(54) **VERFAHREN ZUR KONTINUIERLICHEN INLINE HERSTELLUNG VON BESCHICHTETEN POLYMEREN SUBSTRATEN ODER LAMINATEN**
PROCESS FOR CONTINUOUS INLINE PRODUCTION OF COATED POLYMERIC SUBSTRATES OR LAMINATES
PROCÉDÉ DE FABRICATION EN LIGNE CONTINUE DE SUBSTRATS OU DE LAMINÉS POLYMÈRES REVÊTUS

(30) Priorität: 16.06.2011 DE 102011077612
(43) Veröffentlichungstag der Anmeldung: 23.04.2014
(73) Patentinhaber: Evonik Röhm GmbH, 64293 Darmstadt (DE)
(72) Erfinder: KANZLER, Waldemar, 74321 Bietigheim-Bissingen (DE); HASSKERL, Thomas, 61476 Kronberg (DE); SEYOUM, Ghirmay, 63329 Egelsbach (DE); KLIEM, Patrick, 64354 Reinheim (DE); KREBS, Werner, 67575 Eich (DE); FÖRSTER, Dieter, 64823 Groß-Umstadt (DE); DANNEHL, Manfred, 63796 Kahl am Main (DE)
(86) Internationale Anmeldenummer: PCT/EP2012/061388
(87) Internationale Veröffentlichungsnummer: WO 2012/172032

(56) Entgegenhaltungen:
- EP-A1- 0 551 693
- EP-A2- 0 100 688
- EP-A2- 0 331 087
- WO-A1-03/018661
- WO-A2-02/053298
- JP-A- 2004 130 540
- US-A- 4 234 399

## Beschreibung

### Gebiet der Erfindung

Die vorliegende Erfindung betrifft ein Verfahren zur kontinuierlichen inline Herstellung von beschichteten polymeren Substraten oder Laminaten sowie eine Apparatur zur Durchführung dieses Verfahrens.

### Stand der Technik

Bahnförmige Substrate wie z.B. Platten oder Folien werden seit langem in kontinuierlichen Prozessen, z. B. durch Extrusion von Kunststoffformmassen hergestellt und zur Erzielung hochwertiger Oberflächen mit funktionellen Deckschichten ausgerüstet. Funktionelle Oberflächen können z.B. über Coextrusion geeigneter thermoplastischer Formmassen oder durch Beschichtung erzeugt werden. Bei der Beschichtung haben sich Inlineverfahren unter Einsatz strahlenhärtbarer, lösemittelfreier Systeme bewährt, da diese zugleich umweltfreundlich als auch energie-, kosten-, zeit- und platzsparend sind. Unter den strahlenhärtbaren Verfahren ist die UV-Härtung radikalisch polymerisierbarer Beschichtungsstoffe besonders weit verbreitet, da sie gegenüber anderen Verfahren wie z.B. der Elektronenstrahlhärtung Investitions-, Kosten- und Platzvorteile bietet. Zur Erzielung hochwertiger, witterungsbeständiger Oberflächen ist es günstig, elementaren Sauerstoff aus der Luft von der ungehärteten Oberfläche des Beschichtungsstoffs fernzuhalten und den Beschichtungsstoff z.B. unter Inertisierung zu härten. Inertisierung bedeutet jedoch einen kostenintensiven konstruktiven Aufwand, zusätzlichen Platzbedarf und dauerhaften Verbrauch von Inertisierungsgasen. Es wurden deshalb Verfahren zur Abschirmung gegen Luftsauerstoff durch Abdecken der ungehärteten Oberfläche des Beschichtungsstoffs mit einem geeigneten Abdeckmaterial entwickelt.

EP-A-0 331 087 (Mitsubishi Rayon) beschreibt ein Verfahren zum kontinuierlichen Beschichten eines Substrats mit einem UV-härtbaren Beschichtungsstoff, wobei der ungehärtete Beschichtungsstoff mit einer Folie abgedeckt und mittels UV-Strahlen gehärtet wird. Dem Beschichtungsstoff können UV-Absorber zugesetzt werden, wenn der Photoinitiator für die Strahlenhärtung im Wellenlängebereich zwischen 360 und 400 nm sensitiv ist. Nachteilig an den erhaltenen Deckschichten ist jedoch die relativ geringe Haftung derselben, wobei auch relativ viele Fehlstellen sichtbar sind.

JP-A-2004-130540 (Mitsubishi Gas) beschreibt ein Verfahren bei dem auf ein Polycarbonat-Substrat ein UV-härtbarer Beschichtungsstoff aufgetragen, der ungehärtete Film mit einer Folie abgedeckt und mittels UV-Strahlung durch die Folie gehärtet wird. Gemäß der Lehre dieser Druckschrift muss die Temperatur der zu beschichtenden Oberfläche im Bereich von 70 bis 120°C liegen. Vorzugsweise liegt die Viskosität des Beschichtungsstoffs zwischen 12 und 120 mPas und die Dicke der Beschichtung im Bereich von 1 bis 15 µm. Bei diesen Parametern wird eine gute Haftung der Beschichtung auf dem Polycarbonat erzielt. Zur Abdeckung werden Polyester- oder Triacetatfolien eingesetzt. Durch Anpressen von Rollen, Walzen, Bürsten oder Rakeln (Spateln) wird der Beschichtungsstoff gleichmäßig verteilt.

Die Druckschrift JP-A-2004-130540 lehrt, dass erhöhte Substrattemperaturen zu einer Verbesserung der Haftfestigkeit der Deckschicht auf dem Substrat führt, jedoch ist die erhöhte Temperatur nachteilig für das Ablösen der Abdeckfolie nach dem Härtungsvorgang. Vielfach wird ein untrennbares Laminat erhalten oder beim Ablösen der Folie entstehen linienförmige Störungen.

Ein weiterer Nachteil der erhöhten Substrattemperatur besteht in einer vorzeitigen Ablösung der Folie vom beschichteten Substrat, welche insbesondere vor der Aushärtung des Beschichtungsstoffes auftreten kann. Durch eine schnelle Aushärtung des Beschichtungsstoffes unmittelbar nach der Laminierung kann das Ablösen verhindert werden. Diese Vorgehensweise ist jedoch aufwendig und kann sich ungünstig auf die Haftung, die durch das Anquellen des Substrates zustande kommt, auswirken.

Das Anquellen oder Anlösen eines Kunststoffsubstrats ist günstig für die Haftung zwischen Substrat und Beschichtungsstoff und wird z. B. durch erhöhte Temperaturen oder durch längere Einwirkzeit des ungehärteten Beschichtungsstoffes unterstützt bzw. beschleunigt. Allerdings können bei einer stark erhöhten Substrattemperatur unerwünschte Veränderungen der Oberflächenqualität entstehen, die z.B. durch eine Eintrübung der Substratoberfläche, insbesondere einer Kunststoffoberfläche bei zu langer Einwirkzeit des ungehärteten Beschichtungsstoffs sichtbar werden.

In JP-A-2004-130540 wird beschrieben, dass Polycarbonat seine Schlagzähigkeit verliert wenn es zu stark angequollen wird, weshalb eine spezielle lösemittelfreie Beschichtungsformulierung verwendet wird, die 1,9 Nonandioldiacrylat als Komponente zwingend enthalten muss. Durch die Verwendung von 20 - 60 Teilen 1,9 Nonandioldiacrylat als Komponente des Beschichtungsstoffs gelingt es, die Anquellung zu beschränken. Eine weitere Maßnahme zur Begrenzung der Anquellung ist die Aushärtung unmittelbar nach dem Verpressen von Folie und Substratplatte bereits 12 cm hinter der Laminiervorrichtung.

Substrate, die nach diesem Verfahren mit kurzer Anquellzeit beschichtet werden, zeigen zwar eine gute Anfangshaftung, verlieren jedoch die Haftung vollständig nach 1000 h Bewitterung im Xenotest nach DIN EN ISO 4892-2.

In JP7-74282B wird als Maßnahme zur Vermeidung des Substrat-Anquellens die Abkühlung auf nahezu Raumtemperatur genannt. Diese Maßnahme beinhaltet bei einer inline-Beschichtung eine lange Abkühlstrecke in einer Extrusionslinie und entsprechend lange Verweilzeit. Bei diesem Verfahren entsteht keine Mischphase zwischen Substratpolymer und Beschichtungsstoff, was sich nachteilig auf die Langzeithaftung auswirkt, da das Spannungsniveau im Verbund sehr hoch ist.

In DE69222140T2 (EP 551 693 B1) wird ein Verfahren zur Erwärmung einer mit einem UV-härtbaren Beschichtungsstoff beschichteten Polycarbonatfolie zwecks Eindiffundieren von Beschichtungsstoffkomponenten in die obere Substratschicht zur Haftungsvermittlung beschrieben. Die nasse beschichtete Folie wird durch nachträgliche Erwärmung im Anschluss an die Beschichtung auf eine Temperatur zwischen 32°C und 66°C gebracht und mit UV-Strahlung gehärtet. Der Nachteil dieses Verfahrens ist die Kontamination des nassen Beschichtungsstoffs mit Partikeln aus der Umgebung während der Aufwärmphase.

Strahlenhärtbare Beschichtungsstoffe werden aus Gründen des Umweltschutzes und aus Kostengründen, insbesondere Investitionskosten vorzugsweise lösemittelfrei beschichtet. Problematisch ist jedoch, dass in lösemittelfreien Beschichtungsstoffsystemen Staub oder Schmutzpartikel aus der Umgebung nicht vollständig benetzt werden und im ausgehärteten Beschichtungsstofffilmen zu optischen Defekten führen, die durch einen Lupeneffekt noch vergrößert werden und stark störend sind.

Die Oberflächengüte der Beschichtung ist für viele optische Anforderungen unzureichend wenn nach den in JP-A-2004-130540 aufgeführten Beschichtungsverfahren gearbeitet wird. So kann insbesondere zwischen 100 und 120°C eine unerwünschte Welligkeit der Beschichtung in Extrusionsrichtung entstehen. Weiterhin können, wie zuvor beschrieben, Nachteile durch eine Anlösung der Substratoberfläche auftreten. Aus JP2004-130540A und JP7-74282B ist der Verlust der Schlagzähigkeit des Substrats durch Anquellung beim Beschichtungsprozeß bekannt. In der JP-A-2004-130540 geht durch die geringe Beschichtungsstoffviskosität und das dadurch hervorgerufene sehr starke Anquellen die Schlagzähigkeit in der Grenzschicht verloren.

### Aufgabe

In Anbetracht des Standes der Technik war es Aufgabe der vorliegenden Erfindung ein Verfahren zur Verfügung zu stellen, das die zuvor dargelegten Probleme der Verfahren des Standes der Technik nicht oder nur in verringertem Maße aufweist. Das Verfahren soll nach Möglichkeit universal zur Herstellung beschichteter Substrate sowie zur Herstellung von Laminaten einsetzbar sein. Ferner soll eine Apparatur zur Durchführung des erfindungsgemäßen Verfahrens bereitgestellt werden.

In einer ersten speziellen Aufgabe soll das Verfahren zu einer sehr guten Langzeithaftung zwischen Substrat und Beschichtung bzw. der einzelnen Schichten im Laminat führen.

In einer zweiten speziellen Aufgabe soll die Steuerung des Verfahrens relativ unkompliziert sein, damit keine Beaufsichtigung durch zusätzliches Personal erforderlich ist.

In einer dritten speziellen Aufgabe soll es möglich sein beschichtete Substrate mit einer hohen Oberflächenqualität gemäß dem in der DIN EN ISO 7823-2, Punkt 4.2 "Aussehen" (Tabelle), angegebenen Anforderungsprofil aufweisen. Bevorzugt sollten möglichst wenige Oberflächenstörungen, wie Welligkeit oder Lufteinschlüsse auftreten.

Weiterhin sollte das Verfahren nahezu wartungsfrei, energieeffizient und umweltfreundlich ausgestaltet werden können. Darüber hinaus sollte das Verfahren in existierende Extrusionsanlagen integrierbar sein, ohne dass die Extrusionsgeschwindigkeit nachträglich beeinflußt wird.

### Lösung

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren mit allen Merkmalen des Patentanspruchs 1 sowie durch eine Apparatur nach Anspruch 10. Zweckmäßige Abwandlungen der erfindungsgemäßen Verfahrens werden in Unteransprüchen unter Schutz gestellt.

Die Erfinder haben überraschend herausgefunden, dass es durch eine spezielle Regelung der Anlösezeit und in bevorzugten Ausführungsformen zusätzlich auch der Kontakttemperatur (Definitionen der Begriffe siehe unten) sowie durch eine Härtung des Beschichtungsstoffs bzw. Klebstoffs in mindestens zwei Härtungsschritten, wobei mindestens ein, dem ersten Härtungsschritt nachgeschalteter Härtungsschritt, eine Strahlenhärtung, besonders bevorzugt eine UV-Härtung ist, möglich ist, die gestellten Aufgaben in einem inline Beschichtungsverfahren zu lösen.

Ohne an eine bestimmte Theorie gebunden zu sein, sind die Erfinder der Ansicht, dass durch die Durchführung der Härtung in mindestens zwei Härtungsschritten eine höhere Umsatzrate der reaktiven Gruppen des Beschichtungs- bzw. Klebstoffs erreicht wird, was unter anderem zu der besonders guten Haftung und den besonders guten anwendungstechnischen Eigenschaften der erfindungsgemäßen Kompositmaterialien beiträgt. Ferner kann dadurch eine höhere Produktivität der Anlage erreicht werden.

### Gegenstände der Erfindung

Gegenstand der vorliegenden Erfindung ist dementsprechend ein Verfahren zur kontinuierlichen inline Herstellung von beschichteten polymeren Substraten oder Laminaten,
umfassend die Schritte
a. Bereitstellung eines Substrats aus einem polymeren Material
b. in Kontakt bringen des Substrats mit einem, bevorzugt mittels radikalischer Polymerisation, aushärtbaren Beschichtungsstoff oder Klebstoff
c. Abdecken des Beschichtungsstoffs oder Klebstoffs mit einer Deckfolie
d. Härtung des Beschichtungsstoffs oder Klebstoffs
e. Optional Entfernen der Deckfolie
f. Optional inline optische Qualitätskontrolle
g. Optional Aufbringen einer Schutzfolie
dadurch gekennzeichnet, dass
- die Härtung in mindestens zwei Härtungsschritten erfolgt, wobei der erste Härtungsschritt ein thermischer oder ein Strahlungshärtungsschritt, bevorzugt ein UV-Härtungsschritt ist und mindestens ein nachfolgender Härtungsschritt ein Strahlungshärtungsschritt, bevorzugt ein UV-Härtungssschritt ist, und
- die Anlösezeit für den Fall, dass der erste Härtungsschritt ein Strahlungshärtungsschritt , bevorzugt ein UV-Härtungsschritt oder ein thermischer Härtungsschritt mit verzögerter Initiierung ist, mindestens 10 sec. beträgt, oder
- eine spontane thermische Initiierung der Aushärtung beim ersten Kontakt zwischen Beschichtungs- bzw. Klebstoff stattfindet und
   ▪ die Monomermischung des Beschichtungsstoff- bzw. Klebstoffs, bevorzugt die Kombination aus Initiator und Beschichtungsstoff- bzw. Klebstoffmonomeren und/oder die Konzentration des thermischen Initiators,
      und/oder
   ▪ die Verfahrensbedingungen, bevorzugt die Fördergeschwindigkeit des Substrats und/oder die Kontakttemperatur,
   derart gewählt werden, dass eine Mischphase aus Beschichtungs- bzw. Klebstoff und gelöstem Substratpolymer erhalten wird, deren Dicke zwischen 70 und 1%, bevorzugt zwischen 60 und 3% ganz besonders bevorzugt zwischen 50 und 5%, speziell bevorzugt zwischen 70 und 5%, ganz speziell bevorzugt zwischen 60 und 10% und insbesondere bevorzugt zwischen 50 und 20% der Gesamtschichtdicke der Deck- bzw. Klebeschicht entspricht.

Gegenstand ist weiterhin eine Apparatur zur kontinuierlichen inline Herstellung von beschichteten polymeren Substraten oder Laminaten,
umfassend
I. eine Einrichtung zur Bereitstellung eines Substrats aus einem polymeren Material
II. eine Einrichtung zur Bereitstellung einer Deckfolie
III. eine Einrichtung zur Beschichtung des Substrats und/oder der Deckfolie mit einem, bevorzugt mittels radikalischer Polymerisation, härtbaren Beschichtungsstoff oder Klebstoff
   dadurch gekennzeichnet,
   - dass die Apparatur derart ausgestaltet ist, dass der auf das Substrat aufgetragene Beschichtungsstoff oder Klebstoff in der Apparatur mit einer Deckfolie abgedeckt wird
   - dass die Apparatur derart ausgestaltet ist, dass die Härtung des Beschichtungsstoffs oder Klebstoffs in mindestens zwei Härtungsschritten erfolgt,
   - dass die Apparatur mindestens eine Strahlenquelle, bevorzugt mindestens eine UV-Quelle, umfasst die derart angeordnet ist, dass sie einen auf den ersten Härtungsschritt folgenden Härtungsschritt initiiert,
   - dass die Apparatur derart ausgestaltet ist, dass die Kontakttemperatur variiert werden kann,
   - dass die Apparatur derart ausgestaltet ist, dass die Anlösezeit, im Fall der Durchführung des ersten Härtungsschrittes mittels Strahlungshärtung, bevorzugt UV-Härtung, oder verzögert initiierter thermischer Härtung, mindestens 10 sec. beträgt.

Das erfindungsgemäße Verfahren führt zu einer sehr guten Haftung zwischen Substrat und der aus dem Beschichtungs- bzw. Klebstoff gebildeten Deck- bzw. Klebeschicht. Durch die Anlösezeit, aber auch die Durchführung der Härtung in zwei oder mehreren Schritten kann erreicht werden, dass die klare Phasengrenze zwischen Deck- bzw. Klebeschicht und Substrat verschwimmt und zu einer breiten Übergangszone (Mischphase) aus Beschichtungs- bzw. Klebstoff und gelöstem Substratpolymer wird. Durch das erfindungsgemäße Verfahren können somit Produkte erhalten werden, die sich auch strukturell und in ihren anwendungstechnischen Eigenschaften klar von den Produkten des Standes der Technik unterscheiden. So können die erfindungsgemäßen Kompositmaterialien besser mechanisch bearbeitet werden als die nicht beschichteten Substrate. Die thermische Abkantbarkeit ist auch bei sehr geringen Radien, bis zu Plattendicke x 10, möglich ohne dass Risse in der Beschichtung entstehen. Die Chemikalienbeständigkeit und das Brandverhalten der erfindungsgemäßen Kompositmaterialien sind deutlich besser als bei herkömmlichen Kompositmaterialien.

Gegenstand der vorliegenden Erfindung sind somit auch Kompositmaterialien umfassend eine Deckschicht und ein Substrat bzw. ein Substrat, eine Ktebeschicht und eine weitere auf der Klebeschicht angeordnete Schicht, dadurch gekennzeichnet, dass in der Deck- bzw. Klebeschicht eine Phasengrenze zwischen einer äußeren Phase, mit geringem Anteil an gelöstem Substratpolymer, und einer Mischphase, mit einem gegenüber der äußeren Phase erhöhten Anteil an gelöstem Substratpolymer, existiert. Daneben weisen die Kompositmaterialien eine Phasengrenze zwischen besagter Mischphase und dem Substrat auf.

Durch das erfindungsgemäße Verfahren wird, vor Aushärtung der Beschichtungsstoff- bzw. Klebstoffschicht, ein Anlösen und Quellen der Substratoberfläche erreicht, welche mit verantwortlich für die gute Haftung der Beschichtung auf dem Substrat ist. Mit anderen Worten, nach dem Auftragen des flüssigen Beschichtungs- bzw. Klebstoffs auf das Substrat wird ein Teil der Substratoberfläche angelöst und die gelösten Polymere vermischen sich mit dem Beschichtungs- bzw. Klebstoff. Dabei entsteht eine äußere Phase der Beschichtungs- bzw. Klebstoffschicht, welche keine oder nur sehr geringe Mengen an gelöstem Substratpolymer enthält. Weiterhin entsteht eine Mischphase aus Polymeren des Beschichtungsstoffs und gelösten Substratpolymeren. Diese Mischphase, die zwischen äußerer Phase und Substrat angeordnet ist, wirkt wie ein Haftvermittler und stellt die gute Haftung der erfindungsgemäßen Beschichtung auf dem Substrat sicher.

Die erfindungsgemäßen Kompositmaterialien zeichnen sich in einer bevorzugten Ausführungsform durch eine besonders breite Mischphase aus. Dabei beträgt die Dicke der äußeren Phase bevorzugt zwischen 30 und 99%, besonders bevorzugt zwischen 30 und 97%, ganz besonders bevorzugt zwischen 30 und 95%, speziell bevorzugt zwischen 40 und 90 % und ganz speziell bevorzugt zwischen 50 und 80% der Gesamtdicke der Deck- bzw. Klebeschicht und die Dicke der Mischphase entsprechend zwischen 70 und 1 %, bevorzugt zwischen 70 und 3 %, besonders bevorzugt zwischen 70 und 5%, ganz bevorzugt zwischen 60 und 10% und speziell bevorzugt zwischen 50 und 20% , wobei die beiden Phasen in Summe 100% der Gesamtschichtdicke der Deck- bzw. Klebeschicht ergeben.

Die einzelnen Schichten können in TEM-Aufnahmen (Details zu Messung siehe unten) erkannt und analysiert werden. Der Vollständigkeit halber sei an dieser Stelle darauf hingewiesen, dass es - je nach Wahl der Deckfolie - möglich ist, dass auch Bestandteile dieser Folie in die äußeren Phase übergehen, so dass es sein kann, dass im TEM eine dünne 4. Phase erscheint. In diesem Fall werden jedoch alle Phasen, die zwischen der Phasengrenze Mischphase/äußere Phase und der äußeren Oberfläche der Kompositmaterialien bzw. dem Übergang Klebstoffschicht zu äußerster Schicht vorhanden sind im Rahmen der vorliegenden Erfindung als eine Phase und zwar als äußere Phase betrachtet. Mit anderen Worten, bei der Bestimmung des Dickenverhältnisses zwischen äußerer Phase und Mischphase werden im Rahmen der vorliegenden Erfindung "Unterphasen" innerhalb der äußeren Phase nicht separat betrachtet.

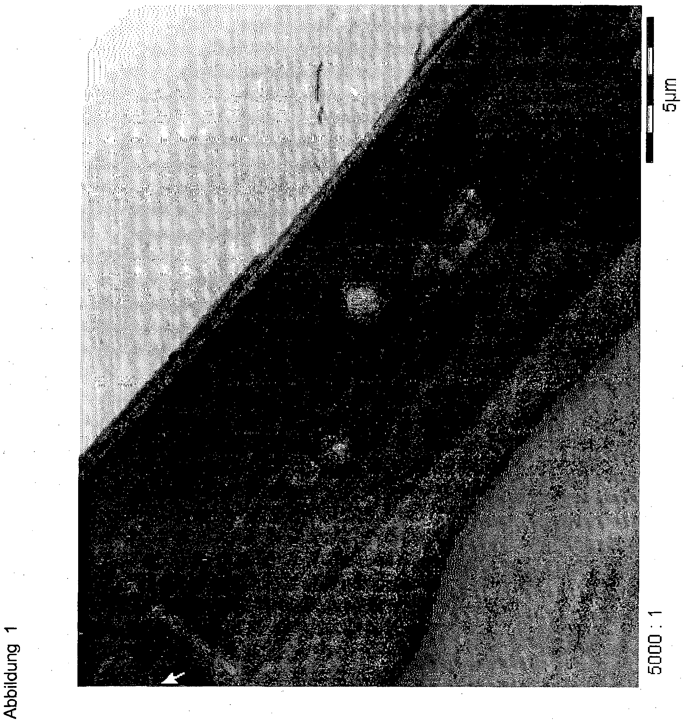

In Abbildung 1 der vorliegenden Erfindung wurde ein Substrat aus PMMA mit einem Beschichtungsstoff beschichtet (Details siehe Beispiel 2, Beschichtungsparameter E2). Man erkennt deutlich das helle Substrat in der linken unteren Ecke, darauf folgend die etwas dunklere Mischphase und schließlich die dunkelste äußere Phase. Der weiße Bereich in der rechten oberen Ecke ist Luft. Die leichten Wellen und Muster innerhalb der äußeren Phase sind Schnittartefakte, die auf die Probenpräparation zurückzuführen sind. In Figur 1 betragen die Dicke der Mischphase etwa 42% der Gesamtdicke der Deckschicht und die Dicke der äußeren Phase entsprechend ca. 58%.

Ein Vorteil des erfindungsgemäßen Verfahrens ist, dass die Deckfolie, sofern eine Opferfolie verwendet wird, mehrfach verwendet werden kann. Darüber hinaus kann die Steuerung des Verfahrens relativ unkompliziert ausgestaltet werden, wobei das Verfahren insbesondere im Hinblick auf Temperaturschwankungen unempfindlich ist. Weiterhin weist das beschichtete Substrat bzw. das Laminat eine hohe Oberflächenqualität auf. So treten insbesondere kaum Oberflächenstörungen, wie Welligkeit oder Lufteinschlüsse auf. Dies ist insbesondere dann der Fall, wenn im erfindungsgemäßen Verfahren eine inline optische Qualitätskontrolle durchgeführt wird, wodurch etwaigen Verschlechterungen der Qualität sofort entgegengewirkt werden kann.

Das erfindungsgemäße Verfahren kann auch eingesetzt werden, um eine strukturierte Oberfläche einfach und sicher zu erhalten. Hierbei können die zuvor dargelegten Vorteile hinsichtlich einer hohen Haftung ebenfalls erzielt werden.

Weiterhin kann das Verfahren auf bekannten Anlagen sicher und einfach durchgeführt werden, wobei insbesondere lange Wartungsintervalle und geringe Stillstandszeiten erzielt werden können. Das erfindungsgemäße Verfahren zeichnet sich durch geringe Energiekosten aus und kann umweltfreundlich ausgestaltet werden. Insbesondere kann auf Lösungsmittel vollständig verzichtet werden, wobei keine gefährlichen Stoffe in die Umwelt freigesetzt werden müssen. Dadurch kann auf spezielle und sehr teure Explosionsschutzmaßnahmen verzichtet und es können Beschichtungsstoffausbeuten von bis zu 100% realisiert werden.

Das erfindungsgemäße Verfahren kann weitgehend automatisiert werden, wobei die notwendigen Aggregate in bestehende Abkühlstrecken von Extrusionsanlagen eingebaut werden können, da dieselben nur einen geringen Platzbedarf aufweisen. Hierdurch kann der Personalbedarf gering gehalten werden.

Im Vergleich zu offline-Verfahren führt das erfindungsgemäße Verfahren zu einem signifikanten Kostenvorteil. Durch die Abdeckung der Beschichtungsstoffschicht bzw. der Klebstoffschicht mit einer Folie kann auf eine teure Inertisierung mit Stickstoff verzichtet werden.

### Begriffsdefinitionen

Die vorliegende Erfindung wird nachfolgend im Detail beschrieben. Zuvor werden jedoch noch einige wichtige Begriffe definiert.

Unter **Substrat** wird in Rahmen der vorliegenden Erfindung eine Kunststoffbahn verstanden, welche je nach Dicke sowohl zu einer Folie als auch zu Platten verarbeitet werden kann. Das Substrat kann aus einer massiven Kunststoffbahn bestehen, es ist jedoch auch möglich durch Extrusion durch entsprechende Düsen sogenannte Hohlkammerprofile zu erzeugen. Entsprechende Techniken sind dem Fachmann bekannt. Ferner kann das Substrat als Laminat aus mehreren Kunststoffen bzw. Kunststoffschichten, ggf. verbunden durch entsprechende Klebschichten, vorliegen.

Unter **Deckfolie** wird eine Folie verstanden, welche derart auf den Beschichtungsstoff oder Klebstoff aufgelegt wird, dass dieser zwischen der Deckfolie und dem Substrat eingeschlossen wird. Wird im erfindungsgemäßen Verfahren ein beschichtetes Substrat hergestellt, so wird als Deckfolie eine **Opferfolie** verwendet, welche vor oder mit dem ersten Härtungsschritt auf den Beschichtungsstoff aufgelegt und nach der ersten oder einem weiteren Härtungsschritt wieder entfernt wird. Dies impliziert in einer besonderen Variante des erfindungsgemäßen Verfahrens, dass die Opferfolie bei der Herstellung der Komposits nicht abgezogen wird und während Lagerung und Transport als Schutzfolie erhalten bleibt, so dass sie erst bei der Endanwendung des erfindungsgemäßen Produkts abgezogen wird. Die Opferfolie kann eine strukturierte Oberfläche aufweisen, welche eine Struktur in der Beschichtungsstoffschicht erzeugt. Dadurch können beschichtete Substrate mit einer strukturierten Oberfläche erzeugt werden. Die Opferfolie wird vorzugsweise wiederverwendet.

Wird nach dem erfindungsgemäßen Verfahren ein Laminat hergestellt, so wird statt eines Beschichtungsstoffs ein mittels radikalischer Polymerisation härtbarer Klebstoff verwendet und die Deckfolie wird nach der Härtung fest in Laminat eingebunden. Je nach Struktur der Deckfolie kann auch hierbei eine strukturierte Oberfläche erzeugt werden.

**Strukturiert** bedeutet, dass die Oberfläche der **Deckschicht,** d.h. der äußersten Schicht des erfindungsgemäßen Produkts, Vertiefungen, Ausbuchtungen, Unebenheiten etc. aufweist.

**Kontakttemperatur** beschreibt die Temperatur der Substratoberfläche welche mit dem Beschichtungs- oder Klebstoff in Verbindung gebracht wird, gemessen 5 cm vor dem ersten Kontakt des Substrats mit dem Beschichtungsstoff oder Klebstoff.

**Deckschicht** bezeichnet die ausgehärtete Beschichtung eines Substrats mit dem Beschichtungsstoff. Die Deckschicht bildet bei der Endanwendung die äußere Oberfläche der erfindungsgemäßen Komposits. Dagegen wird mit **Beschichtungsstoffschicht** die nach dem Auftragen und vor endgültiger Aushärtung des Beschichtungsstoffs auf das Substrat erhaltene Schicht bezeichnet.

**Klebeschicht** bezeichnet die ausgehärtete Beschichtung eines Substrats mit dem Klebstoff. Die Klebeschicht bildet eine Verbindungsschicht zwischen dem Substrat und einer weiteren äußeren Schicht des Komposits. Dagegen wird mit **Klebstoffschicht** die nach dem Auftragen und vor endgültiger Aushärtung des Klebstoffs auf das Substrat erhaltene Schicht bezeichnet.

**Anlösezeit** beschreibt die Zeitspanne zwischen dem ersten Kontakt des Beschichtungsstoffs oder Klebstoffs mit dem Substrat und dem Beginn des ersten Härtungsschrittes. Wird der erste Härtungsschritt in Form einer thermischen Härtung durchgeführt, d.h. umfasst der Beschichtungsstoff oder Klebstoff einen thermisch aktivierbaren Initiator, so kann die Anlösezeit je nach Temperatur des Substrats auch null bzw. nahezu null betragen, d.h. die Härtung kann unmittelbar nach dem ersten Kontakt von Substrat und Beschichtungsstoff oder Klebstoff beginnen. In diesem Fall wird die Härtung jedoch so gesteuert, dass ein hinreichendes Anlösen parallel zur beginnenden Härtung stattfindet. Im Fall der Durchführung des ersten Härtungsschrittes mittels Strahlungshärtung, bevorzugt mittels UV=Härtung, ist die Anlösezeit die Zeit vom ersten Kontakt des Beschichtungsstoffs oder Klebstoffs mit dem Substrat und der ersten Einwirkung von Strahlen auf den Beschichtungsstoff bzw. den Klebstoff.

Unter **Härtungsschritt** wird im Rahmen der vorliegenden Erfindung eine durch eine Aktivierung eines Initiators oder eines Beschleunigers oder durch direkte Energiezufuhr zur Überwindung der Aktivierungsenergie für die Reaktion von Monomeren und Oligomeren, z. B. bei der Polyaddition oder Polykondensation, ausgelöste Polymerisationsreaktion von Bestandteilen des Beschichtungsstoffs bzw. des Klebstoffs verstanden. Die vorliegende Erfindung umfasst bevorzugt thermische und Strahlungshärtung, wobei durch Zufuhr von thermischer oder Strahlungsenergie, bevorzugt UV-Energie, ein Initiator oder ein Beschleuniger aktiviert wird oder die notwendige Aktivierungsenergie zugeführt wird, so dass eine radikalische Polymerisationsreaktion, eine Polykondensation oder eine Polyaddition ausgelöst wird. Die Zufuhr der nötigen thermischen Energie kann über die Substrattemperatur erfolgen, d.h. das Substrat kann vor dem ersten Kontakt mit einem, einen thermischen Initiator enthaltenden oder durch Polyaddition oder Polykondensation härtbaren, Beschichtungsstoff oder Klebstoff, auf die entsprechende Temperatur geheizt oder falls das Substrat zuvor zu heiß war, gekühlt werden. Es ist aber auch möglich, dass ein Substrat, welches beim ersten Kontakt mit dem Beschichtungs- oder Klebstoff nicht die nötige Temperatur zur Aktivierung des Initiators oder Beschleunigers oder zur Zuführung der nötigen Aktivierungsenergie aufweist, zunächst mit einem Beschichtungsstoff oder Klebstoff in Kontakt gebracht wird und danach das entstandene Komposit aufgeheizt und der thermische Initiator aktiviert wird.

Werden im erfindungsgemäßen Verfahren mehrere in Bewegungsrichtung des Substrats hintereinander angeordnete Strahlungsquellen benutzt, so wird im Rahmen der vorliegenden Erfindung davon ausgegangen; dass jede einen Härtungsschritt auslöst. Werden jedoch um die gesamte Substratbreite bestrahlen zu können senkrecht zur Bewegungsrichtung des Substrats mehrere Strahlungsquellen nebeneinander angeordnet, so wird dies im Rahmen der vorliegenden Erfindung als ein Härtungsschritt gewertet, insbesondere solange die Strahlungsquellen und Dosen identisch sind.

Unter **Strahlungshärtung** wird im Rahmen der vorliegenden Erfindung die Härtung mittels energiereicher Strahlung, insbesondere im Wellenlängenbereich von 220 nm bis 480 nm, Elektronenstrahlen. Besonders bevorzugt ist die Härtung mittels UV-Strahlen im Wellenlängenbereich von 260 nm bis 420 nm.

Der Ausdruck **(Meth)acrylat** steht für Acrylat, Methacrylat sowie Mischungen aus beiden. (Meth)acrylate mit mindestens zwei Doppelbindungen sind auch als vernetzende Monomere bekannt.

### Detaillierte Beschreibung der Erfindung

Das erfindungsgemäße Verfahren dient zur Beschichtung von Substraten bzw. zur Herstellung von Laminaten aus entsprechenden Substraten.

### Die Substrate

Die Substrate werden bevorzugt durch thermoplastische Formgebungsyerfahren aus Formmassen oder durch kontinuierliche Gußpolymerisation hergestellt, wobei die Formmassen besonders bevorzugt thermoplastisch verarbeitbare Polymere enthalten.

Zu den bevorzugten Polymeren gehören beispielsweise Poly(meth)acrylate, insbesondere Polymethylmethacrylat (PMMA), Poly(meth)acrylimide, Polyacrylnitrile, Polystyrole, Polyether, Polyester, Polycarbonate, Polyvinylchloride. Hierbei sind Poly(meth)acrylate und Poly(meth)acrylimide bevorzugt. Diese Polymere können einzeln sowie als Mischung eingesetzt werden. Des Weiteren können diese Polymere auch in Form von Copolymeren vorliegen. Bevorzugte Copolymere sind unter anderem Styrol-Acrylnitril-Copolymere, Acrylnitril-Styrol-Butadien-Copolymere, Styrol-Maleinsäure-Copolymere, (Meth)acrylat-Styrol-Maleinsäureanhydrid-Copolymere, Polyphenylsulphone (PPSU), COC-Polymere (Cyclic Olefin Copolymers) und Polymethylmethacrylat-Copolymere, insbesondere Polymethylmethacrylat-Poly(meth)acrylimid-Copolymere.

Gemäß einem besonderen Aspekt der vorliegenden Erfindung können Formmassen eingesetzt werden, die Polycarbonate enthalten. Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern durch Polykondensations- bzw. Umesterungsreaktionen. Gemäß einer besonderen Ausführungsform der vorliegenden Erfindung können Formmassen eingesetzt werden, die mindestens 20 Gew.-%, bevorzugt mindestens 50 Gew.-% und ganz besonders bevorzugt mindestens 80 Gew.-% Polycarbonate enthalten.

Gemäß einer weiteren Ausführungsform der vorliegenden Erfindung weisen besonders bevorzugte Formmassen zur Herstellung der Substrate mindestens 15 Gew.-%, vorzugsweise mindestens 50 Gew.-% und besonders bevorzugt mindestens 80 Gew.-% Poly(meth)acrylate, Polymethylmethacrylat, Polymethacrylmethylimid und/oder Polymethylmethacrylat-Copolymere, bezogen auf das gesamte Gewicht der Formmasse, auf. Der Ausdruck (Meth)acrylate umfasst Methacrylate und Acrylate sowie Mischungen aus beiden.

Poly(meth)acrylate sind allgemein bekannte Polymere, die erfindungsgemäß bevorzugt durch Polymerisation einer Monomerenmischung erhältlich sind, die mindestens 60 Gew.-%, bevorzugt mindestens 80 Gew.-% (Meth)acrylate aufweist, bezogen auf das Gewicht der Monomeren. Die Herstellung der (Meth)acrylat-Homo- und/oder Copolymere nach den verschiedenen Verfahren der radikalischen Polymerisation ist an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Ein weiteres bevorzugtes Substrat ist ein (Co-)Extrudat aus ein oder mehreren Poly(meth)acrylat-Schichten enthaltend organische und / oder anorganische Füllstoffe mit nicht-transparenter Optik und besonders hochwertiger, glänzender Oberfläche mit Tiefeneffekt. Ein kommerzielles Beispiel ist PLEXIGLAS Parapan.

Bevorzugte polymere Substrate können übliche Additive enthalten. Zu diesen Additiven gehören unter anderem organische und anorganische Füllstoffe, nanoskalige Partikel, Pigmente, Trennmittel, Antistatika, Antioxidantien, Entformungsmittel, Flammschutzmittel, Schmiermittel, Farbstoffe, Fließverbesserungsmittel, Lichtstabilisatoren, anorganische und organische UV-Absorber, sterisch gehinderte Amine, Verwitterungsschutzmittel und Weichmacher und Schlagzähmodifier. Die Additive werden in üblicher Menge, d. h. bis zu 80 Gew.-%, vorzugsweise bis zu 30 Gew.-%, bezogen auf die Gesamtmasse eingesetzt. Ist die Menge größer als 80 Gew.-%, bezogen auf die Gesamtmasse, so können Eigenschaften der Kunststoffe wie beispielsweise deren Verarbeitbarkeit stark beeinträchtigt werden.

Die erfindungsgemäßen Substrate sind in der Regel kratzempfindlich wenn sie nicht an der Oberfläche vergütet werden und koppeln Licht an jedem Kratzer aus. Ein kommerzielles Beispiel ist PLEXIGLAS Endlighten, das insbesondere für dekorative Zwecke und Lichtwerbung eingesetzt wird. Daher wird erfindungsgemäß bevorzugt ein Beschichturigsstoff zur Herstellung einer kratzfesten Beschichtung aufgetragen.

### Herstellung der Substrate

Das zu beschichtende Substrat kann durch kontinuierliche Gußpolymerisation oder aus Formmassen durch jede bekannte Formgebungstechnik hergestellt werden, wobei das vorliegende Verfahren zu überraschenden Vorteilen bei Extrusionsverfahren führt. Hierdurch können kontinuierlich Substrate hergestellt und während der Abkühlphase mit einer funktionalen Beschichtung versehen werden. Das erspart ein zusätzliches Aufheizen auf die Kontakttemperatur und somit Zeit und Kosten. Dementsprechend ist das zu beschichtende Substrat vorzugsweise durch Extrusion erhältlich.

Überraschende Vorteile hinsichtlich der Qualität der erhaltenen Beschichtung können unter anderem dadurch erzielt werden, dass das Substrat eine auf das Substratmaterial abgestimmte Kontakttemperatur aufweist. Details hierzu werden weiter unten im Kapitel Verfahrensdetails erläutert.

Bei Temperaturen unterhalb dieser weiter unten im Detail angegebenen Kontakttemperatur kann die Haftung der Beschichtung auf dem Substrat abnehmen. Ferner wurden Trübungen und Rissbildungen nach 1000h Bewitterung im Xenontest nach DIN EN ISO 4892-2 gefunden. Analytische Untersuchungen ergaben zudem, dass zu niedrige Temperaturen zu geringen Doppelbindungsumsatzraten im Beschichtungsstoff führten. Temperaturen oberhalb dieser Grenzen können vielfach zu optischen Beeinträchtigungen führen. Weiterhin kann es dabei zu zu starker Haftung der Opferfolie kommen, so dass diese nicht mehr abziehbar ist.

Bevorzugt weist das Substrat eine Dicke im Bereich von 10 µm bis 500 mm, bevorzugt 20 µm bis 100 mm, besonders bevorzugt 30 µm bis 50 mm und ganz besonders bevorzugt 50 µm bis 25 mm auf.

### Der Beschichtungsstoff bzw. Klebstoff

Das vorliegende Verfahren dient insbesondere zur Beschichtung von Substraten, mit einem Beschichtungsstoff zum Erhalt einer Deckschicht. Es kann jedoch auch verwendet werden um durch den Einsatz entsprechender Klebstoffe zwischen zwei Laminatschichten Laminate herzustellen. Beschichtungsstoff bzw. Klebstoff wird auf das Substrat und/oder die Deckfolie aufgetragen und erfindungsgemäß gehärtet.

Die Art und Zusammensetzung des Beschichtungsstoffs ist von den zu erzielenden Eigenschaften der Deckschicht abhängig. So können gemäß dem erfindungsgemäßen Verfahren unter anderem Deckschichten erhalten werden, die kratzfest, witterungsbeständig, antistatisch, hydrophil, hydrophob, reibungsarm, bedruckbar, glänzend, strukturiert oder matt sind oder mehrere der genannten Eigenschaften gleichzeitig aufweisen. Weiterhin können Barriere- oder Antigraffitieigenschaften erhalten werden. Die Deckschicht kann weiterhin wasserspreitende, biozide und/oder selbstreinigende Eigenschaften aufweisen.

Bei den Harzen für thermische und/oder strahlungs-induzierte, bevorzugt UV-induzierte, Härtung handelt es sich um ungesättigte Verbindungen, die über freie Radikale in Vernetzungsreaktionen zur Filmbildung führen. Durch Variation der Art und Zahl funktioneller Gruppen, sowie der Kettenlängen und- Struktur, ist eine große Produktpalette mit einem breiten Eigenschaftsspektrum zugänglich. Die wichtigsten Vertreter dieser Produkte sind Acrylesterverbindungen gefolgt von ungesättigten Polyestern. Erfindungsgemäß bevorzugt werden Beschichtungsstoffe bzw. Klebstoffe auf Basis von Polyesteracrylaten, Polyetheracrylaten, Epoxidacrylaten und Urethanacrylaten verwendet.

Bevorzugte Beschichtungsstoffe können polymerisierbare Bestandteile mit einem Gehalt aus Monomeren, Oligomeren und höhermolekularen (Meth-)acrylesterharzen und / oder Vinylverbindungen von mindestens 40 %, vorzugsweise mindestens 60 % und besonders bevorzugt mindestens 80 % enthalten.

Die erfindungsgemäß verwendeten Beschichtungsstoffe und Klebstoffe können Monomere als Reaktivverdünner umfassen, die in erster Linie zur Reduzierung der Viskosität dienen. Sie werden bei der Polymerisation in die Polymerkette mit eingebaut und beeinflussen somit direkt die Eigenschaften des Beschichtungsstoffs. Ein wichtiges Merkmal der Monomere ist ihre Funktionalität. Es können mono- bis hexafunktionelle Monomere verwendet werden. Durch die Funktionalität lässt sich die Vernetzungsdichte und somit die chemisch/physikalischen Filmeigenschaften steuern. Erfindungsgemäß bevorzugt verwendete Monomere umfassen: Trimethylolpropantriacrylat (TMPTA), Butandioldiacrylat (BDDA), Hexandioldiacrylat (HDDA), Tripropylenglycoldiacrylat (TPGDA), Dipropylenglycoldiacrylat (DPGDA), Phenoxyethylacrylat (POEA), 4-t-Butylcylohexylacrylat (TBCH), Isobornyl(meth)acrylat (IBOA), Hydroxyethyl(meth)acrylat (HE(M)A), Butyl(meth)acrylat, Ethyldiglycolacrylat (EDGA), Butandiolmonoacrylat (BDMA), Isodecylacrylat, Dipentaerythritolhexaacrylat (DPHA), Pentaerythritol-tri-/tetracrylat (TMPTA).

Von besonderem Interesse sind des Weiteren Beschichtungsstoffe zur Herstellung einer Kratzfestbeschichtung, die höchstens 90 Gew.-%, besonders bevorzugt höchstens 50 Gew.-% an Monomeren mit vier oder weniger Doppelbindungen umfassen.

Die erfindungsgemäß verwendeten Beschichtungsstoffe bzw. Klebstoffe können zudem filmbildende Komponenten, das heißt Präpolymere bzw. Oligomere, umfassen. Diese Komponenten beeinflussen den Grundcharakter des strahlengehärteten Beschichtungsstoffs wie Härte, Kratzfestigkeit, Flexibilität, Haftfestigkeit, Elastizität usw. Erfindungsgemäß werden hauptsächlich Verbindungen mit radikalisch polymerisierbaren Doppelbindungen verwendet, die durch Vernetzungsreaktionen einen Film bilden. Besonders bevorzugte Filmbildner für die radikalische Polymerisation, bevorzugt durch Strahlungs-, besonders bevorzugt durch uv-induzierte Härtung, sind Epoxidacrylate, Polyesteracrylate, Polyetheracrylate, Polyurethanacrylate, Siliconacrylate. Beispiele hierfür sind Laromer® Produkte der Fa. BASF, Ebecryl® Produkte der Fa. Cytec, Genomer® Produkte der Fa. Rahn, Sartomer® Produkte der Fa. Sartomer.

### Epoxidacrylate

Epoxidacrylate entstehen aus der Umsetzung von aromatischen oder aliphatischen Epoxidharzen mit freier Acrylsäure. Beschichtungen zeichnen sich durch hohe Reaktivität, hohe Härte und gute Chemikalienbeständigkeit aus.

### Polyesteracrylate

Polyesteracrylate sind Umsetzungsprodukte von Polyestern mit endständigen Hydroxylgruppen und Acrylsäure. Die Beschichtungen zeichnen sich durch gute Härte und Witterungsbeständigkeit aus

### Polyetheracrylate

Polyetheracrylate sind Produkte aus Veresterung von meist linearen Polyethern mit freien Hydroxylgruppen und Acrylsäure.

### Polyurethanacrylate

Polyurethanacrylate erhält man bei der Umsetzung von Polyurethanpräpolymeren mit endständigen Isocyanatgruppen und Hydroxyalkylacrylaten. Die einfachsten Urethanacrylate ergeben sich durch Umsetzung eines Diisocyanates mit einem hydroxylgruppenhaltigen Monomer. Die Beschichtungen zeichnen sich durch sehr gute Witterungsbeständigkeit, Chemikalienbeständigkeit und Härte bei gleichzeitig guter Flexibilität aus.

### Siliconacrylate

Siliconacrylate entstehen entweder durch Umsetzung von Polydialkylsilanen mit endständigen Silanolgruppen und Hydroxyalkylacrylaten oder durch Addition von Acrylsäure an Polydialkylsilane, die endständige Epoxidgruppen enthalten. Oft werden die Produkte dieser Acrylatgruppe in Klebstoffformulierungen eingesetzt.

Die oben genannten Komponenten der erfindungsgemäß verwendbaren Beschichtungsstoffe bzw. Klebstoffe sind dem Fachmann bekannt und kommerziell erhältlich. Je nach beabsichtigter Eigenschaft der Deckschicht bzw. Klebeschicht kann ein entsprechender Beschichtungsstoff bzw. Klebstoff ausgewählt werden. Nachfolgend werden bevorzugte Materialien für Deck- bzw. Klebeschichten diskutiert:

### Beschichtungsstoffe für Kratzfestbeschichtungen

Die Kratzfestigkeit der Beschichtung hängt unter anderem von dem Vernetzungsgrad ab, welcher aber nicht beliebig steigerbar ist. Bei zu hoher Vernetzungsdichte kann die Polymerisationsschwindung stark zunehmen und es können Spannungen in der Beschichtung eingefroren werden, die nicht mehr relaxiert werden können. Die eingefrorenen Spannungen können nach Belastung, z.B. durch künstliche oder natürliche Bewitterung zu Haftungsverlust oder zur Verformung des mit dem Beschichtungsstoff beschichteten Gegenstandes führen. Es ist deshalb günstig eine Balance zwischen Kratzfestigkeit und Vernetzungsdichte einzustellen. Aus diesem Grund wird die Anzahl an Doppelbindungen pro kg Beschichtungsstoff bevorzugt in einem optimalen Bereich gehalten. Hierbei kann die Kratzfestigkeit insbesondere durch die Verwendung von (Meth)acrylaten mit drei oder mehr Doppelbindungen gesteigert werden.

### Beschichtungsstoffe für wasserspreitende Deckschichten

Beispiele für Beschichtungsstoffe zur Herstellung von hydrophilen wasserspreitende Deckschichten mit verbesserten antistatischen Eigenschaften und leicht zu reinigenden Oberflächen sind Zusammensetzungen mit einem silziumdioxidhaltigen Sol aus SiO₂-Nanopartikeln, dispergiert in einem mono- oder polyfunktionellen Monomeren. Je höher der SiO₂-Gehalt der Beschichtungsstoffe, desto hydrophiler ist die Beschichtung. Im einfachsten Fall kann ein kommerziell verfügbares Silica-Nanosol mit Monomeren mit einer oder mehreren Doppelbindungen im (Meth)-acrylat wie beispielsweise ein 50-prozentiges SiO₂-Sol in Acrylat, erhältlich von Fa. Nanoresins, Geesthacht, unter dem Namen Nanocryl mit Photoinitiatoren versetzt und gehärtet werden. Derartige Sole können untereinander gemischt und/oder mit weiteren (Meth)-acrylaten, Oligomeren und Additiven versetzt werden, um die Viskosität, die Reaktivität, die Vernetzung, Flexibilität, Härte, Hydrophilie, und Langzeitbeständigkeit der Beschichtung einzustellen.

### Beschichtungsstoffe für eine antistatische Deckschicht

Beispiele für Beschichtungsstoffe für antistatische Deckschichten sind Formulierungen der genannten Mono- und Oligomere mit zumindest einem leitfähigen anorganischen Füllstoff, wie z.B. Indiumzinnoxid, Antimonzinnoxid, weiteren anorganischen Oxiden und/oder Mischungen der Oxide. Geeignete anorganische Füllstoffe sind z.B. von Fa. Evonik-Degussa unter dem Namen AdNano ITO oder von Fa. American Elements, Los Angeles (ATO) erhältlich.

### Beschichtungsstoffe für selbstreinigende Oberflächen

Beispiele für Beschichtungsstoffe für selbstreinigende photokatalytische Deckschichten enthalten bevorzugt Titandioxid in der Anatas- oder Brookitmodifikation. Da das photokatalytische Material organische Komponenten in der Beschichtung abbaut, ist eine besondere Zusammensetzung der Beschichtung mit organisch-anorganischen Bestandteilen erforderlich. Der Anteil der oxidativ abbaubaren Komponenten wird so gering wie erforderlich gewählt. Günstig für die Langzeitbeständigkeit ist ein mehrlagiger Aufbau aus einer oder mehreren haftungsvermittelnden Schichten und einer wirkstoffhaltigen Schicht oder einem Gradienten des photokatalytischen Materials mit einer Anreicherung an der Oberfläche und einem möglichst geringen Gehalt an der Phasengrenze zum Substrat oder der darunterliegenden haftungsvermittelnden Schicht.

Um für das erfindungsgemäße Verfahren optimal geeignet zu sein, sollten die oben näher beschriebenen Beschichtungsstoffe bevorzugt eine dynamische Viskosität im Bereich von 50 bis 10000 mPas bei 25°C, besonders bevorzugt im Bereich von 200 bis 5000 mPas bei 25°C und ganz besonders bevorzugt im Bereich von 200 bis 2000 mPas bei 25°C aufweisen, wobei die dynamische Viskosität mit einem Kegel-Platte-Viskosimeter nach DIN 53018 bestimmt werden kann. Bei Klebstoffen liegt die dynamische Viskosität bevorzugt im Bereich von 100 bis 20000 mPas bei 25°C, besonders bevorzugt im Bereich von 5000 bis 10000 mPas bei 25°C und ganz besonders bevorzugt im Bereich von 1000 bis 5000 mPas bei 25°C Zur Einstellung der Viskosität können den Beschichtungsstoffen bzw. Klebstoffen Rheologiesteuerungsmittel oder Polymere zugesetzt werden, wobei strahlungshärtbare, bevorzugt UV-härtbare, Oligomere als Verdicker besonders bevorzugt sind.

Zur Härtung umfassen die erfindungsgemäß verwendeten Beschichtungsstoffe bzw. Klebstoffe bevorzugt mindestens einen Initiator, Aktivator und/oder Beschleiniger, durch den die Härtung der Beschichtungsstoff- bzw. Klebstoffschicht initiiert wird. Die Umsetzung der reaktiven Gruppen der Beschichtungsstoff- bzw. Klebstoffkomponenten kann durch radikalische Polymerisation und / oder Polyaddition und / oder Polykondensation erfolgen. Es können Beschichtungsstoffe bzw. Klebstoffe verwendet werden, die nur nach einem Härtungsmechanismus aushärten, es können aber auch Gemische eingesetzt werden, deren Monomere nach zwei unterschiedlichen Mechanismen aushärten. Im Falle solcher Mischungen ist es besonders bevorzugt, dass mindestens ein Teil der Monomere des Beschichtungsstoffs bzw. Klebstoffs durch radikalische Polymerisation aushärtet und/oder dass dual cure Monomere enthalten sind, welche mindestens zwei verschiedene funktionellen Gruppen in einem Molekül vereinen, die nach zwei unterschiedlichen Mechanismen, bevorzugt radikalische Polymerisation in Kombination mit Polyaddition und / oder Polykondensation, polymerisiert werden. Hierbei ist die Art des Initiators von der Härtungsmethode abhängig, erfindungsgemäß werden mindestens ein durch Strahlung, bevorzugt UV-Strahlung, und ggf. zusätzlich ein oder mehrere durch thermische Energie aktivierbare Initiatoren eingesetzt. Insbesondere bei dual cure Systemen kann eine Polyaddition oder Polykondensation unabhängig von der UV-Härtung stattfinden.

Diese Reaktionen können bei moderaten Temperaturen auch bei Raumtemperatur ablaufen. Das bedeutet, dass die vorliegende Erfindung auch Ausführungsformen umfasst, bei denen die aufgetragene Schicht zunächst thermisch oder UV initiiert wird, dann dem UV-Härtungsschritt unterworfen wird und zum Schluss eine Polykondensation oder Polyaddition stattfindet. Der letzte Härtungsschritt kann bis zu einer Woche bei Raumtemperatur dauern. Der besondere Vorteil der vorliegenden Erfindung liegt darin, dass die Platten bereits nach dem 2. Härtungsschritt gestapelt und verpackt werden können. Der 3. Härtungsschritt (thermisch) verläuft im Hintergrund.

Die zum Start der Kettenreaktion erforderlichen Startradikale können auf zwei verschiedene Wege entstehen. Dies geschieht entweder durch intramolekulare Spaltung oder durch intermolekulare Wasserstoffabstraktion von einem Wasserstoffdonator. Erfindungsgemäß können daher Photoinitiatoren verwendet werden, die zur Klasse der α-Spalter oder der Wasserstoffabstraktoren gehören.

Die Photoinitiatoren müssen erfindungsgemäß folgende Bedingungen erfüllen:
- der vorgesehene Absorptionsbereich muss in einem Emissionsbereich der verwendeten Strahlungsquellen, bevorzugt UV-Quellen, enthalten sein.
- sie müssen im Beschichtungsstoff löslich und lagerstabil sein.
- die gebildeten Radikale müssen die radikalische Kettenpolymerisation starten können
- sie dürfen nicht vergilbend und müssen geruchsarm sein.

Zu den bevorzugten Fotoinitiatoren, mit denen eine radikalische Polymerisation initiiert werden kann, gehören unter anderem Acylphosphinoxide, Alpha-Aminoketone, Alpha-Hydroxyketone, Acetophenonderivate, Benzildimethylketale, Initiatoren auf Basis Benzophenon. Besonders bevorzugt sind 2,2-Diethoxyacetophenon (DEAP, Upjon Corp), n-Butylbenzoinether (® Trigonal-14, AKZO) und 2,2-Dimethoxy-2-phenylacetophenon (®Irgacure 651) und 1-Benzoylcyclohexanol (®Irgacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), Triphenylphosphinoxid (TPO), Darocur 1173, Irgacure 907, Darocure BP die jeweils von der Fa. BASF (ehemals Ciba) kommerziell erhältlich sind. Es können auch Mischungen von mehreren Photoinitiatoren eingesetzt werden.

Der Anteil an Fotoinitiator ist an sich nicht kritisch. Vorzugsweise weist der Beschichtungsstoff oder der Klebstoff 0,01 Gew.-% bis 10 Gew.-%, besonders bevorzugt 0,3 Gew.-% bis 7 Gew.-% und ganz besonders bevorzugt 1 Ges.=% bis 5 Gew.-% Fotoinitiator, bezogen auf die polymerisierbaren Bestandteile der Zusammensetzung, auf.

In einer besonders bevorzugten Ausführungsform der vorliegenden Erfindung enthält der Beschichtungsstoff bzw. der Klebstoff mindestens zwei verschiedene Initiatoren, welche ganz besonders bevorzugt bei unterschiedlichen Energieeinträgen der Stahlungsquelle, bevorzugt bei unterschiedlichen Wellenlängen des UV-Lichts aktivierbar sind. Dies ermöglicht, dass in einem ersten Strahlungshärtungsschritt zunächst nur ein Initiator aktiviert wird und in einem zweiten Strahlungshärtungsschritt dann mit einer anderen Strahlungsquelle, bevorzugt UV-Quelle, der zweite.

Wie bereits erwähnt kann der Beschichtungsstoff bzw. der Klebstoff auch mindestens zwei verschiedene Initiatoren enthalten, wobei einer ein thermischer Initiator und ein weiterer ein durch Strahlung, bevorzugt UV-Strahlung, aktivierbarer Initiator ist. Dies ermöglicht, dass in einem ersten Härtungsschritt zunächst der thermische Initiator aktiviert wird, in einem zweiten Härtungsschritt dann mit einer Strahlenquelle, bevorzugt einer UV-Quelle, der zweite Initiator. Dadurch können z. B. auch Deckfolien verwendet werden, die nur unzureichend oder nicht strahlungsdurchlässig, z. B. nicht UV-durchlässig sind und ggf. vordem 2. Härtungsschritt abgezogen werden. Dies ist insbesondere dann relevant, wenn eine Strahlungshärtung, bevorzugt eine UV-Härtung, weder durch die Deckfolie noch durch das Substrat, z. B. bei gedeckt eingefärbten Substraten, möglich ist.

Zu den bevorzugten thermischen Initiatoren gehören Azoverbindungen, Peroxyverbindungen, Persulfatverbindungen oder Azoamidine. Besonders bevorzugt jedoch nicht limitierend sind 2,2'-Azobis-(isobutyronitril) (AIBN), tert.-Butylper-2-ethylhexanoat, tert-Butyl-perpivalat, 2,2'-Azobis-(2,4-dimethylvaleronitril), tert-Butylperneodecanoat, Bis(4-tert.-Butylcyclohexyl)peroxydicarbonat, Diisopropylperoxidicarbonat, tert-Amyl-perneodecanoat, tert.-Amyl-perpivalat, Dilauroylperoxid, Dibenzoylperoxid, Diisobutyrylperoxid, Dicumolperoxid, Cumolhydroperoxid, Cumolperoxyneodecanoat, 1,1,3,3-Tetramethylbutylperoxyneodecanoat, Di-n-propylperoxydicarbonat, tert.-Amylperoxyneodecanoat, Di-(4-tert.-butyl-cyclohexyl)-peroxydicarbonat, Di-(2-ethylhexyl)-peroxy-dicarbonat, tert.-Butylperoxyneodecanoat, Di-n-butylperoxydicarbonat, Dicetylperoxydicarbonat, Dimyristylperoxydicarbonat, 1,1,3,3-Tetramethylbutyl-peroxypivalat, tert.-Butylperoxyneoheptanoat, Di-(3,5,5-trimethylhexanoyl)-peroxid, Dikaliumpersulfat, Ammoniumperoxidisulfat, 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylaceton peroxid, Dilaurylperoxid, Didecanoylperoxid, Ketonperoxid, Methylisobutylketonperoxid, Cyclohexanonperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, 1,1-Bis(tert.-butylperoxy)cyclohexan, 1,1-Bis(tert.-butylperoxy)3,3,5-trimethylcyclohexan, tert.-Butylhydroperoxid, sowie die von der Firma DuPont unter dem Namen ®Vazo, beispielsweise ®Vazo V50 und ®Vazo WS erhältlichen Radikalbildner. Es können auch Mischungen von verschiedenen thermischen Initiatoren eingesetzt werden.

Es ist im Rahmen der vorliegenden Erfindung auch möglich zwei unterschiedliche Beschichtungsstoffe bzw. Klebstoffe mit jeweils unterschiedlichen Initiatoren aufzutragen und zunächst den einen und dann den anderen Beschichtungsstoff bzw. Klebstoff auszuhärten.

Schließlich kann der Beschichtungsstoff oder der Klebstoff übliche Additive, wie Farbmittel, Pigmente, beispielsweise Metallic-Pigmente, UV-Stabilisatoren, Füllstoffe oder Nanomaterialien, insbesondere ITO-Nanopartikel, ATO-Nanopartikel oder SiO₂-Nanopartikel oder Carbon Nanotubes (CNT) umfassen. Der Anteil dieser Additive ist von der beabsichtigten Anwendung abhängig und kann daher in weiten Bereichen liegen. Vorzugsweise kann dieser Anteil, falls Additive enthalten sind, 0 bis 70 Gew.-%, besonders bevorzugt 0,1 bis 40 Gew.-% betragen.

Der Beschichtungsstoff oder Klebstoff kann geringe Anteile Lösungsmittel umfassen, wobei der Anteil bevorzugt weniger als 5 Gew.-%, besonders bevorzugt weniger als 2 Gew.-% beträgt. Unter Lösungsmittel sind hierbei niedermolekulare Verbindungen zu verstehen, die dazu dienen die Komponenten der Beschichtungszusammensetzung in Lösung zu bringen, rheologische Eigenschaften zu steuern und das Substrat anzuquellen, um bessere mechanische Haftung zu erzielen, ohne dass diese Verbindungen Bestandteil der gehärteten Beschichtung werden. In einer bevorzugten Variante wird die Beschichtung frei von Lösemitteln hergestellt wobei nur die Reaktivverdünner die Funktion der Lösemittel übernehmen. Im letztgenannten Fall kann die Beschichtungsanlage kostengünstig ohne Ex-Schutz ausgeführt werden.

Gemäß dem Verfahren der vorliegenden Erfindung wird der Beschichtungsstoff oder der Klebstoff zwischen einer Deckfolie und einem Substrat aufgebracht und gehärtet. Bevorzugt erfolgt dies so, dass die Beschichtungsstoff- bzw. Klebstoffschicht eine Schichtdicke, gemessen 20 cm nach dem Laminatorspalt, von mehr als 3 µm, bevorzugt 5 bis 100 µm, besonders bevorzugt 5 bis 80 µm, ganz besonders bevorzugt 7 bis 70 µm, speziell bevorzugt 10 bis 60 µm und ganz speziell bevorzugt 10 bis 40 µm aufweist.

Wird die Erfindung als Laminat mit einer Klebstoffschicht ausgeführt, so sind jeweils die größeren Schichtdicken bevorzugt.

### Die Deckfolie.

Wie bereits erwähnt kann es sich bei der Deckfolie sowohl um eine "Opferfolie" handeln, welche nach dem ersten oder einem weiteren Härtungsschritt (d), bevorzugt einem UV-Härtungsschritt (d), in Verfahrensschritt (e) wieder entfernt wird, es kann sich aber auch um eine Folie handeln, welche nach dem Aushärten des Klebstoffs am Substrat angebunden wird und somit ein Laminat bildet.

Die Art und die Beschaffenheit der Opferfolie sind an sich unkritisch, wobei das Folienmaterial jedoch so beschaffen sein sollte, dass die gehärtete Beschichtungszusammensetzung eine möglichst geringe Haftung auf dem Folienmaterial aufweist. Die Haftung darf jedoch nicht so gering sein, dass bereits bei der Härtung eine Delamination auftritt. Eine moderate Haftung, die ein leichtes Abziehen nach der Härtung gewährleistet, ist am günstigsten für den Prozess.

Im Falle von nicht strahlungsdurchlässigen, z. B. nicht UV-durchlässigen, Deckfolien erfolgt zumindest die erste Härtungsstufe bevorzugt entweder thermisch oder durch Strahlungshärtung, bevorzugt UV-Härtung, durch das Substrat, sofern das Substrat hinreichend strahlungsdurchlässig, insbesondere UV-durchlässig, ist.

Geeignete Materialien zur Herstellung der Deckfolien sind unter anderem Kunststoff, Metall, Papier, Textil oder Kombinationen derselben, z. B. Laminate. Zu den bevorzugten Kunststoffen zählen beispielsweise Polyethylenterephthalat (PET), teilacetylierte Cellulosederivate, die als "Triacetat" oder "Diacetat" im Handel sind, Cycloolefincopolymere (COC) und für geringere optische Ansprüche auch Polyolefine.

Bei dem erfindungsgemäßen Härtungsprozess wird die Oberflächenbeschaffenheit der Deckfolie, z. B. die glatte, raue oder strukturierte Oberfläche auf der Oberfläche der ausgehärteten Beschichtung als Negativ abgebildet.

Gemäß einer besonderen Ausgestaltung der vorliegenden Erfindung kann die Oberfläche der Deckfolie zur Erzielung besonders glatter Oberflächen der Deckschicht, die dem Substrat zugewandt ist, einen Glanzgrad von mindestens 80 Glanzeinheiten bei 20°, bevorzugt größer 100° und besonders bevorzugt größer 120° aufweisen, gemessen mit Byk-Gardner Glanzmeßgerät micro-Trigloss.

In einer anderen Ausführungsform hat die Folie eine raue oder strukturierte Oberfläche, die von der Beschichtungsmasse abgeformt wird.

Besonders umweltfreundliche Verfahren zeichnen sich dadurch aus, dass die Opferfolie, die auch als Abdeckmaterial bezeichnet werden kann, wieder verwendet wird. Dementsprechend kann z. B. ein nahtlos geschlossenes Band, bevorzugt Metallband, eingesetzt und kontinuierlich im Kreis gefahren werden.

Erfindungsgemäß wird die Opferfolie bevorzugt nach dem ersten oder einem weiteren Härtungsschritt abgezogen. In einer bevorzugten Ausführungsform der vorliegenden Erfindung wird die Opferfolie nach dem ersten aber vor dem zweiten Härtungsschritt entfernt. Dadurch erfolgt eine erste Härtung thermisch oder per Strahlung, insbesondere UV-Strahlung, "durch" die Opferfolie oder "durch" das Substrat, die dem ersten Härtungsschritt nachgeschaltete Strahlungshärtung jedoch ohne Opferfolie zwischen der Beschichtungsstoffschicht und der Strahlungsquelle, bevorzugt der UV-Quelle. Da auch die Opferfolie einen gewisse Abschwächung der Intensität der Strahlung, bei einer ersten Strahlungshärtung "durch" die Opferfolie verursacht, kann durch dieses Verfahren eine deutlich bessere Energieausnutzung der Strahlungsquelle, insbesondere einer UV-Quelle, und somit eine insgesamt schnellere vollständige Aushärtung erreicht werden. Ferner ist es in dieser Ausführungsform möglich zwei unterschiedliche Strahlungsinitiatoren, insbesondere UV-Initiatoren zu verwenden, von denen einer "durch" die Opferfolie aktivierbar ist, der andere jedoch erst nach Entfernung der Opferfolie.

Es ist natürlich auch möglich, die Opferfolie erst nach dem letzten Härtungsschritt zu entfernen. Hierbei kann die Opferfolie gleichzeitig auch als Schutzfolie fungieren, d. h. auf dem finalen Produkt verbleiben, so dass sie erst nach Lagerung und Transport zum Bestimmungsort abgezogen wird.

### Verfahrensdetails

Es hat sich als zweckmäßig erwiesen, dass die Beschichtungsmasse nicht bis an den äußeren Rand des Substrats bzw. der Folie gelangt. Vorzugsweise kann ein Streifen von ca. 0,1 bis 10 cm, bevorzugt 0,5 bis 7 cm am Rand unbeschichtet bleiben. Dieser dient als Puffer für die im Laminator herausgepresste Beschichtungsmasse. Durch die Steuerung der Dosierung und des Anpressdrucks der Laminierwalze kann das Herauspressen der Beschichtungsmasse am Rand des vorzugsweise bahnförmigen Substrats zwischen Deckfolie und Substrat vermieden werden.

Das Auftragen des Beschichtungsstoffs bzw. Klebstoffs auf das Substrat und/oder auf die Deckfolie, kann auf jede bekannte Weise erfolgen. Geeignete Verfahren für die Beschichtung sind Gießen, Sprühen, Rakeln, Extrudieren, Walzenbeschichten oder gleichmäßige Dosierung über eine oder mehrere Dosierstellen mittels einer oder mehrerer Pumpen. Bevorzugte Verfahren sind die Zufuhr über eine oder mehrere Düsen, besonders bevorzugt eine Breitschlitzdüse oder über Rakel, wobei die Beschichtungsaggregate so ausgelegt werden und die Beschichtungsmenge so verteilt und begrenzt wird, dass an den Rändern des Substrats und / oder Abdeckmaterials unbeschichtete Streifen (wie oben beschrieben) verbleiben.

In einer besonderen Ausgestaltung kann der Beschichtungsstoff oder der Klebstoff unmittelbar auf das zu beschichtende Substrat aufgebracht werden. Weiterhin kann er auf die dem Extrudat zugewandte Seite der Deckfolie appliziert und mit mindestens einer Walze auf das gegenüberliegende Substrat angepresst werden.

In einer weiteren Ausführungsform kann sowohl das zu beschichtende Substrat als auch die Deckfolie vor dem Verpressen im Laminator beschichtet werden. Bei dieser Beschichtungsvariante hat man die Möglichkeit, unterschiedliche Funktionalitäten zusammenzuführen, wie z. B. Haftvermittler und funktionelle Deckschicht. Dieses Verfahren bietet weitere Möglichkeiten, wie z. B. die Ausbildung eines Gradienten der Funktionalität, der Barriereeigenschaften oder Kombination von verschiedenen Funktionalitäten, beispielsweise eine Antigraffiti-Eigenschaft und einer Kratzfestbeschichtung.

In einer speziell bevorzugten Ausführungsform wird der Beschichtungsstoff oder der Klebstoff so auf das Substrat und/oder die Deckfolie aufgetragen, dass sich zwischen Deckfolie und Substrat unmittelbar vor dem Eintritt in den Laminator bzw. die Andruckwalzen (11) eine Wulst ausbildet. Der Beschichtungsstoff oder der Klebstoff werden bevorzugt derart aufgetragen, dass sich eine Wulst bildet, welche zum Rand des Substrats hin einen Bereich aufweist, der in Richtung des Randes des Substrats eine abnehmende Wulstlänge aufweist. Unter Wulstlänge wird dabei die Länge der Wulst vom Anpressspalt, d.h. dem Punkt an dem die beiden Anpresswalzen des Laminators bzw. der Anpressrollen (11) den geringsten Abstand zueinander haben, und dem Ende der Ausdehnung der Wulst in Richtung Extruder verstanden. Eine zum Rand des Substrats hin abnehmende Länge der Wulst bedeutet, dass die Wulstlänge am äußeren Rand des Substrats kurz ist und zur Mitte hin kontinuierlich oder diskontinuierlich zunimmt. Denkbar sind z. B. trapezförmige Wulste, die in der Mitte des Substrats ein in etwa parallel zu den Walzen verlaufendes Wulstende aufweisen und die dann in Richtung zur Substratgrenze ab einem bestimmten Punkt eine abnehmende Wulstlänge aufweisen. Ebenfalls denkbar sind in etwa dreieckförmige, keilförmige, halbrunde oder halbovale Wulste, welche in etwa in der Mitte des Substrats die größte Wulstlänge aufweisen, welche dann nach beiden Seiten zum Rand hin abnimmt. Derartige Wulste können z. B. erzeugt werden, wenn nur an einem Punkt in der Mitte des Substrates und/oder der Deckfolie oder nur in einem Bereich in der Mitte des Substrates und/oder der Deckfolie der Beschichtungsstoff oder der Klebstoff aufgetragen werden. Die Wulstlänge beträgt bevorzugt zwischen 0,5 mm an der kürzesten Stelle und bis zu 30 cm an der längsten Stelle, bevorzugt 0,5 cm an der kürzesten Stelle und bis zu 25 cm an der längsten Stelle und besonders bevorzugt mindestens 1 cm an der kürzesten Stelle und bis zu 20 cm an der Längsten Stelle. Diese Wulstlänge stellt sicher, dass immer hinreichend Reservoir an Beschichtungsstoff oder Klebstoff vorhanden ist und somit Fehlstellen in der Beschichtung vermieden werden können. Ohne an eine bestimmte Theorie gebunden zu sein sind die Erfinder zudem der Ansicht, dass eine hinreichende Wulstlänge auch die Benetzung des Substrates und der Staubpartikel auf dem Substrat und Deckfolie verbessert wird, was ebenfalls die Beschichtungsqualität steigert. Durch die bevorzugte Form der Wulst, d.h. mit zum Rand des Substrats hin abnehmender-Wulstlänge entstehen z. B. Scherkräfte in der Wulst, welche nach Beobachtungen der Erfinder unter anderem dafür Sorgen, dass Luftblasen und einzelne Staubpartikel zum Rand hin befördert werden und somit die Beschichtungsqualität steigt. Bevorzugt befindet sich dann am Plattenrand eine Absaugung von überschüssigem Lack, welcher abgesaugt, filtriert und wieder eingesetzt werden kann.

Um die Wulst möglichst schnell aufbauen zu können ist es bevorzugt beim Anfahren des erfindungsgemäßen Prozesses mehr Beschichtungsstoff oder Klebstoff als im stationären Zustand zuzudosieren und nach entsprechender Wulstausbildung die Dosierung bis hin zum stationären Zustand zu reduzieren.

Ein weiterer positiver Effekt durch die Wulstbildung ist der, dass vor dem Laminator bzw. den Anpressrollen eine weitgehende Angleichung von Substrat, Deckfolie und Beschichtungsstoff- bzw. Klebstofftemperatur recht einfach erreicht werden kann, was zu einer verbesserten Haftung der Beschichtung auf dem Substrat und Benetzung beitragen kann.

Zur Erzielung einer optisch hochwertigen Oberfläche kann der Prozess vorzugsweise in sauberer Umgebung, z. B. in einem Reinraum durchgeführt werden.

Bevorzugt wird erfindungsgemäß in einem Laminator bzw. zwischen Anpresswalzen, besonders bevorzugt mit einer oder mehreren Walzen ein Druck auf die Beschichtungs- bzw. Klebstoffschicht zwischen der Deckfolie und dem Substrat ausgeübt. Hierzu können auf dem Gebiet der Extrusion und der Laminierung übliche Walzen eingesetzt werden. Diese Walzen können aus Metall oder elastischen Materialien wie Gummi oder Silikon hergestellt sein. Überraschende Vorteile können durch Walzen mit einer Shore-Härte A nach DIN ISO 7619 zwischen 30 und 100, besonders bevorzugt zwischen 40 und 80 erzielt werden. Es ist bevorzugt Walzen mit der zuvor genannten Shore Härte zu verwenden, da sich Schmutzpartikel in zu weiche Walzen eindrücken und somit die Oberfläche der Beschichtung nicht negativ beeinflussen können und zu harte Walzen zu optischen Defekten führen können. Der Umfang der Walze kann vorzugsweise im Bereich von 500 bis 5000 mm, besonders bevorzugt im Bereich von 1000 bis 3000 mm liegen. Die erforderliche Laminierkraft wird bevorzugt im Bereich von 10 bis 10000 N, besonders bevorzugt im Bereich von 50 bis 6000 N und ganz besonders bevorzugt im Bereich von 100 bis 4000 N gewählt. Die Laminierkraft wird abhängig von der Shorehärte der oberen Laminierwalzen, Viskosität des Beschichtungsstoffes und Plattengeschwindigkeit gewählt. Dabei gelten folgende Prinzipien:
- je weicher die Gummierung der Walze desto höhere Laminierkraft ist erforderlich
- je viskoser der Beschichtungsstoff desto höhere Laminierkraft ist erforderlich
- je höher die Plattengeschwindigkeit, desto höhere Laminierkraft ist erforderlich.

Um die Einstellung der Laminierwalzen überprüfen zu können erfolgt bevorzugt eine inline-Schichtdickenmessung nach der Laminierstation. Die Schichtdicke wird bevorzugt mittels Weißlichtinterferometrie berührungslos bestimmt. Dabei entstehen durch Reflexion von Licht an Grenzflächen der Schichten Interferenzspektren aus denen die Dicke der Schicht berechnet werden kann. Die Messung erfolgt besonders bevorzugt unmittelbar nach der Laminierstation durch die Deckfolie bevor der Lack dem ersten Härtungsschritt unterworfen wird, da für die Messung eine klare Grenzfläche zwischen Substrat und Beschichtungsmasse benötigt wird.

Bei einer bevorzugten Ausgestaltung der vorliegenden Erfindung wird das Substrat in Schritt a) durch Extrusion erhalten, wobei die Substratbreite vorzugsweise im Bereich von 200 mm bis 6000 mm besonders bevorzugt im Bereich von 400 mm bis 3000 mm liegt.

Ja nach molekularer Struktur, Kettenlänge und Chemikalienbeständigkeit des Substratmaterials wird bevorzugt eine spezielle Kontakttemperatur und besonders bevorzugt eine spezielle Kombination aus Kontakttemperatur und Anlösezeit eingehalten um sicherzustellen, dass eine hinreichend dicke Mischphase und somit eine hinreichend gute Langzeithaftung erzielt wird.

Besonders bevorzugte Kontakttemperaturen für die jeweiligen Substratpolymere sind:

**Tabelle 1**

| Substratpolymer | Bevorzugte Kontakttemperatur | Besonders bevorzugte Kontakttemperatur | Ganz besonders bevorzugte Kontakttemperatur |
|---|---|---|---|
| PMMA basiertes Polymer | 70 bis 110 °C | 80 bis 110 °C | 90 bis 100 °C |
| Polycarbonat basiertes Polymer | 80 bis 130 ° C | 90 bis 120 ° C | 95 bis 110 ° C |
| Styrol-Acrylnitril basiertes Copolymer (SAN) | 65 bis 110 ° C | 70 bis 105 ° C | 80 bis 100 ° C |
| Polyvinylchlorid basiertes Polymer (PVC) | 60 bis 110 ° C | 70 bis 100 ° C | 75 bis 95 ° C |

Um die zuvor genannten Kontakttemperaturen zu erreichen kann es notwendig sein, dass das Substrat vor dem ersten Kontakt mit dem Beschichtungsstoff bzw. dem Klebstoff, d.h. zwischen den Schritten a) und b), durch eine geeignete Heizeinrichtung, bevorzugt einem IR-Strahler, erwärmt wird, so dass die gewünschte Kontakttemperatur erreicht wird.

Im Falle der Durchführung des ersten Härtungsschrittes mittels Strahlungshärtung, bevorzugt mittels UV-Härtung, beträgt die Anlösezeit mindestens 10 s, bevorzugt von 15 bis 240 s, besonders bevorzugt 20 bis 180 s und ganz besonders bevorzugt 30 bis 120 s. Das ist notwendig um eine ausreichende Langzeithaftung der Beschichtung zu erzielen. Die Anlösezeit wird bevorzugt durch die Fördergeschwindigkeit des Substrats oder durch die Positionierung der 1. Strahlungsquelle, bevorzugt der 1. UV Quelle in Bezug auf die Stelle des 1. Kontakts des Beschichtungsstoffs oder Klebstoffs mit dem Substrat gesteuert.

Bei thermischer Härtung im ersten Härtungsschritt muss ebenfalls eine hinreichende Anlösung sichergestellt werden. Die kann z. B. dadurch erreicht werden, dass eine verzögert initiierte thermische Härtung durchgeführt wird, d.h. das Substrat beim ersten Kontakt mit dem Beschichtungsstoff oder dem Klebstoff eine Temperatur aufweist, die unter der Aktivierungstemperatur des thermischen Initiators liegt und somit erst durch eine Wärmezufuhr, z. B. mittels eines IR-Strahlers, die thermische Härtung einsetzt. In diesem Fall gelten die im vorhergehenden Absatz genannten Anlösezeiten analog.

Besonders bevorzugte Kombinationen aus Kontakttemperatur und Anlösezeit für die jeweiligen Substratpolymere sind:

**Tabelle 2:**

| Substratpolymer | Bevorzugte Kontakttemperatur und Anlösezeit | Besonders bevorzugte Kontakttemperatur und Anlösezeit | Ganz besonders bevorzugte Kontakttemperatur und Anlösezeit |
|---|---|---|---|
| PMMA basiertes Polymer | 70 bis 110 °C und 15 bis 240 s | 80 bis 110 °C und 20 bis 180 s | 90 bis 100 °C und 30 bis 120 s |
| Polycarbonat basiertes Polymer | 80 bis 130 °C und 15 bis 240 s | 90 bis 120 °C und 20 bis 180 s. | 95 bis 110 °C und 30 bis 120 s |
| Styrol-Acrylnitril basiertes Copolymer (SAN) | 65 bis 110 °C und 15 bis 240 s | 70 bis 105 °C und 20 bis 180 s | 80 bis 100 °C und 30 bis 120 s |
| Polyvinylchlorid basiertes Polymer (PVC) | 60 bis 110°C und 15 bis 200 s | 70 bis 100 °C und 20 bis 120 s | 75 bis 95 °C und 30 bis 90 s |

In einer weiteren speziellen Variante der vorliegenden Erfindung setzt die thermische Härtung spontan mit dem ersten Kontakt des Beschichtungs- bzw. Klebstoffs mit dem Substrat ein, so dass die Anlösezeit quasi 0 s beträgt. Um hierbei dennoch eine hinreichende Anlösung sicher zu stellen ist es bevorzugt, dass die thermische Härtung langsam von statten geht bzw. zumindest am Anfang langsam abläuft. Dies kann auf vielerlei Arten, z. B. durch die Zusammensetzung der Monomermischung des Beschichtungsstoff- bzw. Klebstoffs oder durch Verfahrensparameter geregelt werden, so dass hier lediglich eine funktionelle Definition dieses Verfahrensschrittes möglich ist, nämlich, dass die Zusammensetzung der Monomermischung des Beschichtungsstoff- bzw. Klebstoffs und/oder die Verfahrensparameter derart gewählt werden, dass eine Mischphase erhalten wird, deren Dicke zwischen 70 und 1%, bevorzugt zwischen 60 und 3% und ganz besonders bevorzugt zwischen 50 und 5% , der Gesamtschichtdicke der Deck- bzw. Klebeschicht entspricht.

Bevorzugte Möglichkeiten zur Regulierung der Anlösung bei der spontanen thermischen Initiierung sind, die Kombination aus Initiator und Beschichtungsstoff-bzw. Klebstoffmonomeren und/oder die Konzentration des thermischen Initiators und/oder die Fördergeschwindigkeit des Substrats und/oder die Kontakttemperatur. Durch die langsame Aushärtung erfolgen Anlösen und Aushärten parallel.

Die Fördergeschwindigkeit extrudierter Kunststoffbahnen hängt hauptsächlich vom Durchsatz des Extruders ab. Aus wirtschaftlichen Gründen wird bei einem technisch maximal möglichen Durchsatz gearbeitet. Dementsprechend werden dicke Platten mit geringem Vorschub und dünne Platten und Folien bei einem hohen Vorschub hergestellt. Platten mit 25 mm Dicke können in Abhängigkeit von der Förderleistung des Extruders und der Bahnbreite z.B. mit einer Bahngeschwindigkeit von 0,2 m/min gefördert werden. Folien mit 500 µm Dicke können entsprechend z. B. mit bis zu 8 m/min gefördert werden. Bevorzugt liegt die Fördergeschwindigkeit des Substrats im Bereich von 0,1 bis 10 m/min.

Das erfindungsgemäße Verfahren wird bevorzugt derart durchgeführt, dass mindestens eine Oberfläche des Substrats vor dem ersten Kontakt mit dem Beschichtungsstoff bzw. dem Klebstoff, d.h. zwischen den Schritten a) und b), gereinigt wird. Hierzu umfasst die verwendete Apparatur entsprechende Einrichtungen.

Am Ende des erfindungsgemäßen Verfahrens wird bevorzugt, je nach dem, ob die Opferfolie abgezogen oder ein Laminat hergestellt wird, ggf. nach einer ebenfalls bevorzugt durchgeführten inline optischen Qualitätskontrolle (Schritt f), nach Abschluss der Schritte d) oder d) und e) oder d) und f) oder d) und e) und f) in Schritt g) zumindest eine Oberfläche des erhaltenen Produkts mit einer abziehbaren Schutzfolie beschichtet.

### Apparatur

Die erfindungsgemäße Apparatur zur kontinuierlichen inline Herstellung von beschichteten polymeren Substraten oder Laminaten, umfasst
I. eine Einrichtung zur Bereitstellung eines Substrats aus einem polymeren Material
II. eine Einrichtung zur Bereitstellung einer Deckfolie
III. eine Einrichtung zur Beschichtung des Substrats und/oder der Deckfolie mit einem, bevorzugt mittels radikalischer Polymerisation, härtbaren Beschichtungsstoff oder Klebstoff
   und ist dadurch gekennzeichnet,
   - dass die Apparatur derart ausgestaltet ist, dass der auf das Substrat aufgetragene Beschichtungs- oder Klebstoff in der Apparatur mit einer Deckfolie abgedeckt wird
   - die Apparatur derart ausgestaltet ist, dass die Härtung des Beschichtungsstoffs oder Klebstoffs in mindestens zwei Härtungsschritten erfolgt
   - dass die Apparatur mindestens eine Strahlungsquelle, bevorzugt mindestens eine UV-Quelle, umfasst, die derart angeordnet ist, dass sie einen, auf den ersten Härtungsschritt folgenden, Härtungsschritt initiiert,
   - dass die Apparatur derart ausgestaltet ist, dass die Kontakttemperatur variiert werden kann,
   - dass die Apparatur derart ausgestaltet ist, dass die Anlösezeit, im Fall der Durchführung des ersten Härtungsschrittes mittels Strahlungshärtung, bevorzugt UV-Härtung, oder verzögert initiierter thermischer Härtung, mindestens 10 s beträgt.

Bei der Einrichtung zur Bereitstellung des Substrats handelt es sich bevorzugt um einen Extruder, besonders bevorzugt einen Einschneckenextruder. Mittels des Extruders kann ein Monolayer oder ein Multilayersubstrat in der gewünschten Dicke und Breite bereitgestellt werden. Die Techniken hierzu sind hinlänglich bekannt. Das Substrat kann jedoch auch von z. B. einer Rolle bereitgestellt werden. Diese Verfahrensalternative hat jedoch den Nachteil, dass das Substrat erst entsprechend aufgeheizt werden muss.

Um sicher zu stellen, dass eine hinreichend gewünschte Kontakttemperatur erzielt werden kann, umfasst die Apparatur bevorzugt eine geeignete Heiz- oder Kühleinrichtung, bevorzugt einen IR-Strahler als Heizeinrichtung, durch den das Substrat vor dem ersten Kontakt mit dem Beschichtungsstoff bzw. dem Klebstoff, erwärmt oder gekühlt werden kann, so dass die gewünschte Kontakttemperatur erreicht wird. Besonders bevorzugt ist die Apparatur derart ausgestaltet, dass der notwendige Heiz- oder Kühlaufwand möglichst gering ist bzw. gar nicht anfällt.

Um eine besonders gute Qualität der Deckschicht sicher zu stellen kann die Apparatur geeignete Reinigungseinrichtungen, bevorzugt Klebewalzen und/oder Bürstensysteme und/oder Corona-Vorbehandlung und/oder Einrichtungen zum Abblasen mit ionisierter Luft, umfassen, durch die mindestens eine Oberfläche des Substrats und/oder der Deckfolie, bevorzugt vor dem ersten Kontakt mit dem Beschichtungsstoff bzw. dem Klebstoff reinigt.

Die erfindungsgemäße Apparatur umfasst Einrichtungen zum Auftragen des Beschichtungsstoffs oder Klebstoffs auf das Substrat und/oder die Deckfolie. Das Auftragen kann mittels Gießen, Sprühen, Rakeln, Extrudieren, Walzenbeschichten oder gleichmäßiger Dosierung über eine oder mehrere Dosierstellen mittels einer oder mehrerer Pumpen erfolgen. Geeignete Apparatebestandteile sind dem Fachmann hinreichend bekannt. Bevorzugt ist die Apparatur derart ausgestaltet, dass die Zufuhr des Beschichtungsstoffs und Klebstoffs über eine oder mehrere Düsen, besonders bevorzugt eine Breitschlitzdüse oder über Rakel oder über einen Gießkasten erfolgt, wobei die Beschichtungsaggregate so ausgelegt werden und die Beschichtungsmenge so verteilt und begrenzt wird, dass an den Rändern des Substrats und / oder Abdeckmaterials unbeschichtete Streifen (wie oben beschrieben) verbleiben.

Die erfindungsgemäße Apparatur umfasst bevorzugt einen Laminator bestehend aus mindestens 2 Laminierwalzen bzw. Anpresswalzen , in dem bzw. zwischen denen das Substrat, die Beschichtungsstoff- bzw. Klebstoffschicht und die Deckfolie, verpresst werden, wobei mindestens die 1. obere Laminierwalze bevorzugt einen Elastomerbezug (Gummierung) haben soll. Hierzu werden besonders bevorzugt die oben näher beschriebenen Walzen verwendet.

In einer besonders bevorzugten Ausführungsform umfasst die erfindungsgemäße Apparatur nach dem Laminator bzw. den Anpresswalzen eine Einrichtung zur Kontrolle der Schichtdicke des Lacks und zur Höheneinstellung der Laminierwalzen bzw. der Anpressrollen. Die Schichtdicke wird bevorzugt mittels Weißlichtinterferometrie berührungslos bestimmt. Dabei entstehen durch Reflexion von Licht an Grenzflächen der Schichten Interferenzspektren aus denen die Dicke der Schicht berechnet werden kann. Die Messung erfolgt besonders bevorzugt unmittelbar nach der Laminierstation durch die. Deckfolie bevor der Lack dem ersten Härtungsschritt unterworfen wird, da für die Messung eine klare Grenzfläche zwischen Substrat und Beschichtungsmasse benötigt wird.

Zur Durchführung des ersten Härtungsschrittes als thermische Härtung kann die erfindungsgemäße Apparatur nach dem Laminator eine Heizeinrichtung, bevorzugt einen oder mehrere IR-Strahler umfassen.

Die Apparatur umfasst eine Einrichtung zum Zuführen der Deckfolie und eine Einrichtung, die es ermöglicht die Deckfolie (hier als Opferfolie) auch wieder abzuziehen. Bevorzugt ist diese Einrichtung derart ausgestaltet, dass die als Deckfolie verwendete Opferfolie nach dem ersten oder einem weiteren Härtungsschritt abgezogen wird. In einer besonderen Ausführungsform kann die Deckfolie als im Kreis geführtes nahtloses Band ausgelegt sein, so dass es nicht von einer Rolle abgewickelt und von einer anderen wieder aufgewickelt werden muss, sondern kontinuierlich im Kreis gefahren wird.

Es ist ebenfalls besonders vorteilhaft, wenn die Apparatur eine inline optische Qualitätskontrolle, bevorzugt in Form von einer Kamera- und Detektionssystems für optische Fehler, umfasst. Diese ist bevorzugt derart angeordnet ist, dass die Qualitätskontrolle in Schritt f) nach Abschluss der Schritte d) oder e) durchgeführt wird. Diese Einrichtung ermöglicht es auf Qualitätsschwankungen umgehend zu reagieren und entsprechende Anpassungen umgehend vorzunehmen.

Üblicher Weise wird das fertige Produkt mit einer Schutzfolie für den Transport auf mindestens einer Oberfläche beklebt. Daher ist die Apparatur bevorzugt derart ausgestaltet, dass zumindest eine Oberfläche des erhaltenen Produkts mit einer abziehbaren Schutzfolie beschichtet wird, wobei die Beschichtungseinrichtung mit der Schutzfolie bevorzugt derart angeordnet ist, dass je nach dem, ob die Deckfolie abgezogen oder ein Laminat hergestellt wird, die Schutzfolie nach Abschluss der Schritte d) oder d) und e) oder d) und f) oder d) und e) und f) in Schritt g) aufgebracht wird.

Um besonders gute Ergebnisse in der Qualität der Oberflächen zu gewährleisten, ist die Apparatur bevorzugt derart ausgestaltet, dass die Schritte a) bis d) oder a) bis e) oder a) bis f) unter Reinraum- und/oder klimatisierten Bedingungen durchgeführt werden.

Die erfindungsgemäße Apparatur umfasst mindestens eine Strahlungsquelle, bevorzugt mindestens eine UV-Quelle. Bei der/den UV-Quelle(n) handelt es sich bevorzugt um Strahler, Röhren, Lampen und/oder LED's, deren Strahlung im Wellenlängenbereich von 100 nm bis 480 nm liegt.

Die erfindungsgemäße Apparatur umfasst bevorzugt mindestens zwei Strahlungsquellen, bevorzugt mindestens zwei UV-Quellen, mit denen der erste und ein weiterer Härtungsschritt durchgeführt werden. Weiterhin können die einzelnen Strahler in ihrer Leistung eingestellt werden.

Diese Strahlungsquellen für die unterschiedlichen Härtungsschritte können in einer bevorzugten Ausführungsform der vorliegenden Erfindung derart angeordnet sein, dass mehrere Strahlungsquelle durch die Deckfolie hindurch einen oder mehrere Härtungsschritte initiieren. Theoretisch können die Strahlungsquellen in Förderrichtung des Substrats unmittelbar hintereinander oder in einer Apparatur bzw. einem Bauteil der Apparatur angeordnet sein. Um zu vermeiden, dass an bestimmten Punkten eine zu hohe Strahlendosis auf das Substrat einwirkt, sind die Strahlungsquellen jedoch bevorzugt mit einem Abstand zueinander in Förderrichtung angeordnet. Der geeignete Abstand kann je nach Substratdicke, Fördergeschwindigkeit, Substrat- und Lackzusammensetzung individuell angepasst werden.

In einer zweiten besonders bevorzugten Ausführungsform der vorliegenden Erfindung sind die Strahlurigsquellen bevorzugt derart angeordnet, dass bei Verwendung einer Opferfolie zumindest ein Strahlungshärtungsschritt, bevorzugt mindestens ein UV-Härtungsschritt, durch die Deckfolie oder durch das Substrat und zumindest ein Strahlungshärtungsschritt, bevorzugt zumindest ein UV-Härtungsschritt, nach Entfernung der Deckfolie erfolgt. In einer bevorzugten Ausführungsform kann es sich um zwei oder mehr Strahlenquellen, bevorzugt UV-Quellen, mit unterschiedlichen Energieabstrahlungen, im Falle von UV-Quellen mit unterschiedlichen Wellenlängen des UV-Lichts handeln.

Besonders bevorzugt wird mindestens eine UV- Strahlungsquelle mit einer regelbaren Leistung von > 100 W/cm und mindestens eine nachgeschaltete UV-Strahlungsquelle mit einer regelbaren Leistung von > 80 W/cm verwendet werden. Insbesondere bevorzugt wird als erste UV-Quelle zumindest ein Hg-Strahler mit Eisen- oder Galliumdotierung und zumindest ein nachgeschalteter Hg-Strahler (2. UV-Quelle) mit oder ohne Eisen- oder Galliumdotierung verwendet. Wie zuvor bereits ausgeführt kann der erfindungsgemäß verwendete Beschichtungsstoff oder Klebstoff zwei oder mehr unterschiedliche Initiatoren aufweisen, welche bei unterschiedlichen Wellenlängen aktivierbar sind. Durch die zuvor genannten UV-Quellen wird dem Rechnung getragen. In einer besonders bevorzugten Ausführungsform wird dabei zumindest ein Hg-Strahler mit Eisen- oder Galliumdotierung verwendet, wobei der Beschichtungsstoff oder Klebstoff einen Photoinitiator, ausgewählt aus der Gruppe bestehend aus Acylphosphinoxiden und- blends, Benzildimethylketal, Alpha-Aminoketone, (Beispiele: Irgacure 651, Irgacure 369, lrgacure 907, Irgacure 819, Darocure TPO, Darocur 4265) umfasst, und zumindest ein nachgeschalteter Hg-Strahler mit oder ohne Eisen- oder Galliumdotierung verwendet wird, wobei der Beschichtungsstoff oder Klebstoff einen Photoinitiator, ausgewählt aus der Gruppe, bestehend aus Alpha-Hydroxyketonen und -blends, (Beispiele: Irgacure 184, Irgacure 1173, Irgacure 127), umfasst.

Enthält der erfindungsgemäß verwendete Beschichtungsstoff oder Klebstoff nur eine Sorte von Initiatoren, so umfasst die erfindungsgemäße Apparatur mindestens zwei Strahlungsquellen, bevorzugt UV-Quellen, wobei es sich jedoch bevorzugt um zweimal die gleiche Quelle handelt.

Die erfindungsgemäß verwendeten Strahlungsquellen müssen nicht unbedingt unterschiedliche Wellenlängen aufweisen, da durch Entfernung der Opferfolie nach dem ersten Härtungsschritt die Beschichtung anderen Wellenlängen ausgesetzt ist. PET Folie lässt z. B. die Strahlung unter 310 nm nicht durch, so dass z. B. ein Initiator, der bei dieser Wellenlänge aktiviert wird, erst nach der Entfernung der Opferfolie, ein anderer jedoch bereits vor deren Entfernung aktiviert werden kann, auch wenn jeweils gleiche Strahlungsquellen zum Einsatz kommen.

Die Verwendung von mindestens zwei Härtungsschritten, bevorzugt mindestens zwei Strahlungsquellen, davon besonders bevorzugt mindestens einer UV-Quelle, stellt sicher, dass der Beschichtungsstoff oder Klebstoff auch bei hoher Bahngeschwindigkeit vollständig bzw. weitgehend vollständig ausgehärtet ist. Die Erfinder haben herausgefunden, dass dies bei nur einem Härtungsschritt, insbesondere bei nur einer Strahlungshärtung, speziell bei nur einer UV-Quelle und Härtung durch die Deckfolie, nicht möglich ist. Bei nur einer Strahlungsquelle muss deren Leistung sehr hoch gewählt werden, was nachteilig für die Produktqualität ist. So kann es bei Härtung mit einer Lampe durch den dadurch bedingten sehr hohen Energieeintrag in das Substrat dazu kommen, dass es zu einer Substratverformung kommt. Bei Härtung mit zwei Strahlenquellen kann die Leistung jeder einzelnen Quelle herabgeregelt werden, so dass die Verteilung der notwendigen Energiedosis auf mehrere Lampen zu einem ausgewogenen Temperaturhaushalt des Substrats führt und dieses dadurch plan bleibt.

Des Weiteren führt die Nachhärtung des Beschichtungsstoffes mit der 2. Strahlenquelle zu einem höheren C=C Umsatz und somit besserer Witterungsbeständigkeit. Es erfolgt eine vollständigere Aushärtung in kürzerer Zeit als mit einer Strahlenquelle. Insbesondere wenn die zweite Strahlenquelle nach Abziehen der Opferfolie angeordnet ist und somit keine Abschwächung der Strahlung durch die Opferfolie erfolgt, wurden besonders gute Ergebnisse erzielt.

Die erfindungsgemäße Apparatur ist bevorzugt derart ausgestaltet, dass die Anlösezeit durch die Regulierung der Fördergeschwindigkeit des Substrats oder durch die Positionierung der 1. Strahlenquelle, bevorzugt 1. UV Quelle. bzw. der Wärmequelle bei verzögerter thermischer Initiierung in Bezug auf die Stelle des 1. Kontakts des Beschichtungsstoffs oder Klebstoffs mit dem Substrat gesteuert werden kann. Dabei kann entweder die Position der 1. Strahlenquelle, bevorzugt 1. UV-Quelle bzw. der Wärmequelle und/oder die Position des 1. Kontakts des Beschichtungsstoffs oder Klebstoffs mit dem Substrat variiert werden.

Die erfindungsgemäßen Kompositmaterialien können zur Herstellung von mechanisch oder auch chemisch stark beanspruchten Teilen, Geräten und Objekten eingesetzt, wie beispielsweise
Teile Automobil im Innen- und Außenbereich wie Zierleisten, Tachoabdeckungen, Blenden, Außenspiegel, Säulenverkleidungen, Spiegeldreiecke etc., oder
Teile von elektronischen Geräten wie z. B. im Bereich Haushaltsgeräte oder Telekommunikation oder Informations- oder Unterhaltungstechnologie, wie insbesondere Handy, Computer-, Organizer, MP3 - Player- oder Fernseherabdeckungen oder Displaysteile, insbesondere auch bei Touchscreens, oder
als Verscheibung(Verglasung, insbesondere bei Fahrzeugen (PKW, Nutzfahrzeuge, Schiffe, Flugzeuge, Helikopter etc.) oder bei Objekten wie z. B. Gebäuden oder bei Bildschirmen aller Art, oder
als Maschinenteile, z.B. Maschinengehäuse, Maschinenabdeckungen etc., oder
als Teile im Möbel- oder Laden- oder Messebau, oder
als Teile von thermischen Solaranlagen oder Photovoltaikanlagen, oder oder als Gebrauchsgegenstände wie z. B. Bilderrahmen, Dekorationsartikel; Vitrinen etc..

Sie weisen zudem den Vorteil auf, dass sie besonders gut bedruckbar sind. Grund hierfür ist z.B. eine hohe erreichbare Oberflächenspannung von > 36 mN/m der ausgehärteten Schicht. Ferner lässt sich die gute Bedruckbarkeit dadurch erklären, dass im erfindungsgemäßen Verfahren keine oberflächenaktiven Additive im Lack benötigt werden, da bei der Beschichtung keine Grenzfläche zwischen Lack und Luft gebildet wird. Somit findet auch keine Anreicherung für die Bedruckbarkeit schädlicher oberflächenaktiver Substanzen an der Oberseite der Beschichtung statt.

Die erfindungsgemäße Beschichtung löst sich auch bei starker Umformung des fertigen Bauteils nicht vom Substrat, was ebenfalls ein großer Vorteil gegenüber dem Stand der Technik ist.

### Meßmethoden

### TEM-Aufnahmen zur Bestimmung der Schichtdicken bzw. der Dicken der einzelnen Phasen

Zur Visualisierung der Feinstruktur der Kratzfestbeschichtung und zur Bestimmung der Schichtdicken der Mischphase und der äußeren Phase werden Dünnschnitte mittels

Ultramikrotom Leica UC7 angefertigt, unter Einsatz eines Diamantmessers des Typs Diatome Histo HI 4254, Schnittwinkel der Klinge 45°, 130 nm Schnittdicke. Die Schnitte sind dabei parallel zu den einzelnen Schichten des Komposits durchzuführen, d.h. wenn die Schichten des Kompositmaterials waagerecht angeordnet sind, ist auch der Schnitt waagerecht durchzuführen.

Bei Schnitten im 45° Winkel zur Kratzfestschicht bzw. senkrecht zur Kratzfestschicht kann es zu Schnittartefakten (z. B. welligen Stauchungszonen) kommen, so dass die einzelnen Schichten nicht mehr sauber erkannt werden können bzw. durch den Druck des Messers auf die Schichten sich die Schichtdicken verändern. Um gute Aufnahmen zu erhalten ist nach Möglichkeit ein neues oder völlig intaktes, neuwertiges Diamantmesser zu verwenden.

Von den Dünnschnitten wurden TEM-Aufnahmen angefertigt.

### Bestimmung der Kontakttemperatur

Diese wurde mittels Pyrometer (berührungsloser Infrarotthermometer) durchgeführt, wobei der Meßpunkt 5 cm vor dem ersten Kontakt zwischen Substrat und Beschichtungs- bzw. Klebstoff lokalisiert ist.

Nachfolgend soll die Erfindung mit Beispielen und Vergleichsbeispielen näher erläutert werden, ohne dass hierdurch eine Begrenzung erfolgen soll.

### Beispiel 1:

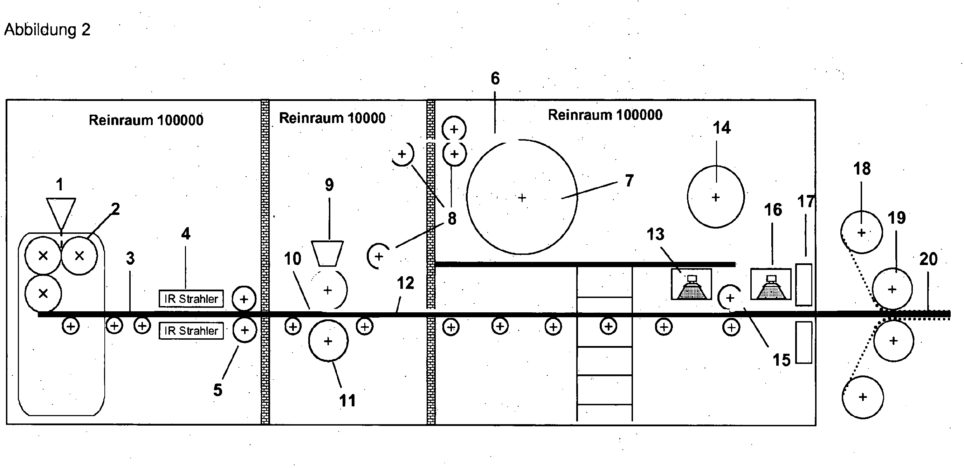

In Abbildung 2 wird beispielhaft eine Apparatur zur Durchführung der vorliegenden Erfindung gezeigt. Dabei wird eine Formmasse mittels eines Extruders (1) extrudiert und mittels mehrere Rollen und Walzen (2) ein Substrat (3) mit der gewünschten Dicke erzeugt. Das Substrat kann falls nötig mittels der Heizeinrichtung (4) auf die gewünschte Kontakttemperatur gebracht werden. Das Substrat wird somit zunächst durch die Heizeinrichtung (4), hier IR-Lampen, und danach durch eine Oberflächenreinigungseinrichtung (5), bestehend aus Klebewalzen geführt. Parallel wird eine Opferfolie (6) von einer Rolle (7) abgewickelt und über mehrere Rollen, eine Reinigungseinheit und Klebewalzen, einer Dosiereinrichtung (9), bestehend aus einer Rakel für den Beschichtungsstoff, zugeführt. Mittels der Dosiereinrichtung (9) wird eine Seite der Opferfolie (6) mit dem Beschichtungsstoff oder Klebstoff beschichtet. Die beschichtete Opferfolie (6) wird mit dem Substrat (3) im Punkt (10) in Kontakt gebracht, wobei z. B. mittels der Heizeinrichtung (4) sichergestellt wird, dass die der Opferfolie zugewandte Oberfläche des Substrats (3) im Punkt (10) eine Kontakttemperatur von 80 bis 110°C aufweist. Mittels der Walzen (11) werden die Opferfolie (6) und das Substrat (3) mit dem dazwischen befindlichen Beschichtungsstoff zusammengedrückt. Die gewünschte Schichtdicke des Beschichtungsstoffs wird über die Regelung der Dosierung in der Einheit (9) sowie durch den Druck der Walzen (11) eingestellt. Das Komposit (12) aus Substrat (3), Opferfolie (6) und dazwischen befindlichem Beschichtungsstoff wird unter einer ersten UV-Quelle (13) durchgeführt, wo ein erster Härtungsschritt erfolgt. Danach wird die Opferfolie (6) abgezogen und auf die Rolle (14) aufgewickelt. Das von der Opferfolie (6) befreite und mit dem angehärteten Beschichtungsstoff beschichtete Substrat wird der zweiten UV-Quelle (16) zugeführt und die finale Härtung durchgeführt. Es folgt eine inline optische Qualitätskontrolle (17). Zum Schluss wird das beschichtete Substrat auf beiden Seiten mit einer Transportschutzfolie (18) beschichtet, die Folie mittels der Walzen (19) angedrückt, wodurch das fertige Produkt (20) erhalten wird.

Die Vorrichtungen (1) bis (4) befinden sich dabei in einem klimatisierten Reinraum nach ISO 14644-8. Die Teile (9) - (11) befinden sich dabei in einem klimatisierten Reinraum nach ISO 14644-7 und die Teile (6) (7) und (12) bis (17) befinden sich in einem weiteren klimatisierten Reinraum nach ISO 14644-8.

### Beispiel 2:

Es wurden mittels der Apparatur gemäß Beispiel 1 verschiedene Versuche zur Kratzfestbeschichtung von PMMA- und Polycarbonat Substraten durchgeführt. Dabei wurden die Anlösezeit, die Kontakttemperatur und die Leistung der UV-Lampe variiert. Die Qualität der beschichteten Platten wurde mittels der Kriterien Transmission, Gelbwert, Haze und Haftung der Beschichtung, jeweils nach 0, 1000, 2000, 3000 und 5000 h Bewitterung ermittelt.

Die Transmission wurde mit dem Hazeguard plus der Firma Byk-Gardner, nach ASTM D 1003, zu verschiedenen Zeitpunkten vor bzw. nach künstlicher Bewitterung, gemessen.

Der Gelbwert wurde mittels eines Varian Cary 5000 nach DIN 5036 zu verschiedenen Zeitpunkten vor bzw. nach künstlicher Bewitterung gemessen.

Der Haze wurde mit dem Hazeguard plus der Firma Byk-Gardner, nach ASTM D 1003, zu verschiedenen Zeitpunkten vor bzw. nach künstlicher Bewitterung, gemessen.

Die Haftung wurde per Gitterschnitt mit einem Gerät der Firma Erichsen, Model 295, nach DIN EN ISO 2409 gemessen. Je höher die Werte, desto schlechter ist die Haftung.

Die Bewitterung erfolgte im Xenontest nach DIN EN ISO 4892-2.

Als Formmasse zur Herstellung des Substrats wurde PLEXIGLAS®-Formmasse 7H verwendet. Das Substrat hatte eine Dicke von 3 mm und die Beschichtungsstoffschicht eine Dicke von 13 µm . Als Beschichtungsstoff wurde eine Mischung aus hexafunktionellem aliphatischem Urethanacrylat, Alkandioldiacrylat, Benztriazol-UV-Absorber, sterisch gehindertem Amin, Cyclohexylphenylketon, Acylphosphinoxid verwendet.

Als UV-Quellen wurden benutzt ein 50 cm breiter Fe-dotierter Strahler mit 150W/cm Leistung bei 100% Ausgangsleistung. Die Bahnbreite des Substrats betrug 400 mm.

Die weiteren Rahmenbedingungen und Ergebnisse finden sich in den nachfolgenden Tabellen 3 bis 5. Dabei wurden:
In Tabelle 3 wurde die Kontakttemperatur variiert, wobei die Leistung der UV-Lampe einmal 30% und 60% betrug.
In Tabelle 4 die Kontakttemperatur und die Leistung der UV-Lampe wie in D1 variiert wurden, jedoch die Anlösezeit jeweils 90 s betrug.

Tabelle 5 zeigt Beschichtungsversuche auf Polycarbonat bei unterschiedlichen Kontakttemperaturen.

**Tabelle 3**

| **Std** | **Parameter** | **Einheit** | **V1** | **E1** | **E2** | **E3** | **V2** | **E4** | **E5** | **E6** | **V3** |
|---|---|---|---|---|---|---|---|---|---|---|---|
| | Substrat | | PMMA XT | PMMA XT | PMMAXT | PMMAXT | PMMA XT | PMMA XT | PMMA XT | PMMA XT | PMMA XT |
| | Anlösezeit | Sec | 30 | 30 | 30 | 30 | 30 | 30 | 30 | 30 | 163 |
| | Temperatur Substrat | °C | 60 | 80 | 90 | 100 | 60 | 80 | 90 | 100 | 70 |
| | Leistung UV-Lampe | % | 30 | 30 | 30 | 30 | 60 | 60 | 60 | 60 | 30 |
| 0 | Transmission | % | 91,2 | 91,99 | 91,96 | 91,98 | 91,99 | 91,97 | 91,98 | 91,98 | 92,06 |
| 1000 | Transmission | % | 91,3 | 92,04 | 92,04 | 92,01 | 91,99 | 92,03 | 92,03 | | 92,16 |
| 2000 | Transmission | % | 92,6 | 93,33 | 92,49 | 92,07 | 93,94 | 94,23 | 93,38 | 92,08 | 93,84 |
| 3000 | Transmission | % | 92,5 | 94,62 | 94,69 | 93,29 | 95,12 | 95,33 | 95,21 | 93,41 | 94,58 |
| 0 | Gelbwert | | 0,48 | 0,40 | 0,47 | 0,44 | 0,43 | 0,46 | 0,41 | 0,45 | 0,45 |
| 1000 | Gelbwert | | 1,7 | 0,55 | 0,56 | 0,49 | 1,30 | 0,55 | 0,56 | 0,49 | 0,52 |
| 2000 | Gelbwert | | | 0,08 | 0,39 | 0,45 | | 0,01 | 0,05 | 0,49 | -0,25 |
| 3000 | Gelbwert | | | 1,47 | 1,02 | -0,03 | | 0,97 | 0,47 | -0,02 | 2,93 |
| 0 | Haze | % | 0,38 | 0,32 | 0,32 | 0,28 | 0,35 | 0,17 | 0,17 | 0,34 | 0,15 |
| 1000 | Haze | % | 0,78 | 0,22 | 0,24 | 0,28 | 0,50 | 0,18 | 0,19 | 0,32 | 0,23 |
| 2000 | Haze | % | | 0,25 | 0,22 | 0,27 | | 0,25 | 0,22 | 0,3 | 1,36 |
| 3000 | Haze | % | | 0,48 | 0,3 | 0,27 | | 0,45 | 0,42 | 0,3 | 1,18 |
| 5000 | Haze | % | | 1,36 | 0,86 | 0,71 | | 1,39 | 0,8 | 0,8 | 1,53 |
| 0 | Haftung | GT | 0 | 0 | 0 | 0 | 0 | 0 | 0 | 0 | 0 |
| 1000 | Haftung | GT | 5 | 0 | 0 | 0 | 5 | 0 | 0 | 0 | 0 |
| 2000 | Haftung | GT | | 0 | 0 | 0 | | 0 | 0 | 0 | 0 |
| 3000 | Haftung | GT | | 0 | 0 | 0 | | 0 | 0 | 0 | 1 |
| 5000 | Haftung | GT | | 0 | 0 | 0 | | 0 | 0 | 0 | 5 |

**Tabelle 4:**

| **Std** | | **Einheit** | **E7** | **E8** | **E9** | **E10** | **E11** |
|---|---|---|---|---|---|---|---|
| | Material | | PMMA XT | PMMA XT | PMMAXT | PMMA XT | PMMA XT |
| | Anlösezeit | sec | 90 | 90 | 90 | 90 | 90 |
| | Temperatur Substrat | °C | 80 | 90 | 100 | 80 | 90 |
| | Leistung UV-Lampe | % | 30 | 30 | 30 | 60 | 60 |
| 0 | Transmission | % | 91,94 | 91,93 | 91,92 | 91,95 | 91,97 |
| 1000 | Transmission | % | 91,97 | 92,01 | 92,02 | 92,03 | 92,06 |
| 2000 | Transmission | % | 92,64 | 92,53 | 92,96 | 92,38 | 92,35 |
| 3000 | Transmission | % | 92,13 | 94,89 | 94,03 | 94,86 | 94,74 |
| 5000 | Transmission | % | 95,3 | 95,4 | 95,05 | 95,22 | 95,48 |
| 0 | Gelbwert | | 0,40 | 0,38 | 0,36 | 0,38 | 0,38 |
| 1000 | Gelbwert | | 0,45 | 0,50 | 0,46 | 0,48 | 0,48 |
| 2000 | Gelbwert | | 0,17 | 0,21 | -0,04 | 0,17 | 0,17 |
| 3000 | Gelbwert | | 0,3 | -0,13 | -0,32 | -0,04 | -0,22 |
| 5000 | Gelbwert | | 0,19 | 0,19 | 0,39 | 1,18 | 0,58 |
| 0 | Haze | % | 0,26 | 0,22 | 0,20 | 0,25 | 0,25 |
| 1000 | Haze | % | 0,19 | 0,31 | 0,20 | 0,22 | 0,25 |
| 2000 | Haze | % | 0,24 | 0,24 | 0,37 | 0,33 | 0,34 |
| 3000 | Haze | % | 0,25 | 0,32 | 0,3 | 0,26 | 0,3 |
| 5000 | Haze | % | 0,51 | 0,49 | 0,48 | 2,43 | 0,47 |

**Tabelle 5:**

| **Std** | | **Einheit** | **E13** | **E14** | **E15** | **V4** |
|---|---|---|---|---|---|---|
| | Material | | PC | PC | PC | PC |
| | Anlösezeit | sec | 60 | 60 | 60 | 60 |
| | Temperatur Substrat | °C | 80 | 90 | 100 | 120 |
| | Leistung UV-Lampe | % | 30 | 30 | 30 | 30 |
| 0 | Transmission | % | 87,79 | 87,74 | 87,75 | 87,85 |
| 1000 | Transmission | % | 88,51 | 88,63 | 88,40 | 88,46 |
| 2000 | Transmission | % | 88,78 | 88,79 | 88,80 | 88,50 |
| 0 | Gelbwert | | 1,38 | 1,38 | 1,41 | 1,43 |
| 1000 | Gelbwert | | 1,46 | 1,41 | 1,45 | 1,49 |
| 2000 | Gelbwert | | 1,61 | 1,53 | 1,56 | 1,82 |
| 0 | Haze | % | 0,37 | 0,35 | 0,32 | 0,45- |
| 1000 | Haze | % | 0,43 | 0,38 | 0,34 | 0,73 |
| 2000 | Haze | % | 0,54 | 0,42 | 0,38 | 0,96 |

Aus Tabelle 3 erkennt man, dass die Transmission bei allen Versuchen in einem sehr guten Bereich von über 92% lag. Eine absolut unerwartete Besonderheit des erfindungsgemäßen Verfahrens ist die, dass die Transmission nach Bewitterung sogar noch besser wird (siehe auch Tabellen 4 und 5 unten). D.h. die Beschichtung wird durch die Bewitterung nicht schlechter, so wie Beschichtungen des Standes der Technik, sondern besser. Dies ist ein signifikanter und nicht vorhersehbarer technischer Fortschritt gegenüber Verfahren und Produkten des Standes der Technik.

Man erkennt weiterhin, dass die Gelbwerte und der Haze bei Kontakttemperaturen zwischen 80 und 100 °C selbst nach 3000h Bewitterung hervorragend sind. Mit zunehmender Kontakttemperatur verbessern sich beide Parameter. Es wurde jedoch auch gefunden, dass bei zu hohen Kontakttemperaturen (in den Tabellen nicht gezeigt) die Haftung der Opferfolie zu stark war bzw. die Opferfolie nicht mehr abgezogen werden konnte. Hinsichtlich der Leistung der UV-Lampe hat sich gezeigt, dass sich eine erhöhte Leistung leicht positiv auf den Gelbwert auswirkt. Hinsichtlich der Haftung zeigen die Vergleichsversuche V1, V2 und V3 im Vergleich zu den erfindungsgemäßen Versuchen E1 bis E6, dass zu geringe Kontakttemperaturen, selbst bei sehr langen Anlösezeiten (siehe V3) zu ungenügender Haftung führen können. V4 zeigt, dass zu hohe Kontakttemperaturen ebenfalls negativ für den Haze und Gelbwert nach längerer Bewittterung sind.

Bei Vergleich der Tabellen 3 und 4 zeigt sich, dass eine Erhöhung der Anlösezeit zu deutlich besseren Transmissionen, Gelbwerten und Haze führt. Auch die Haftung wird verbessert. Wird die Anlösezeit jedoch zu lange gewählt (nicht in den Tabellen gezeigt), so kommt es zur Ausbildung von optischen Störstellen und einem schlechteren Haze.

Gemäß Tabelle 5, zeigen sich ähnliche Effekte bei Polycarbonat als Substrat wie bei PMMA.

### Beispiel 3

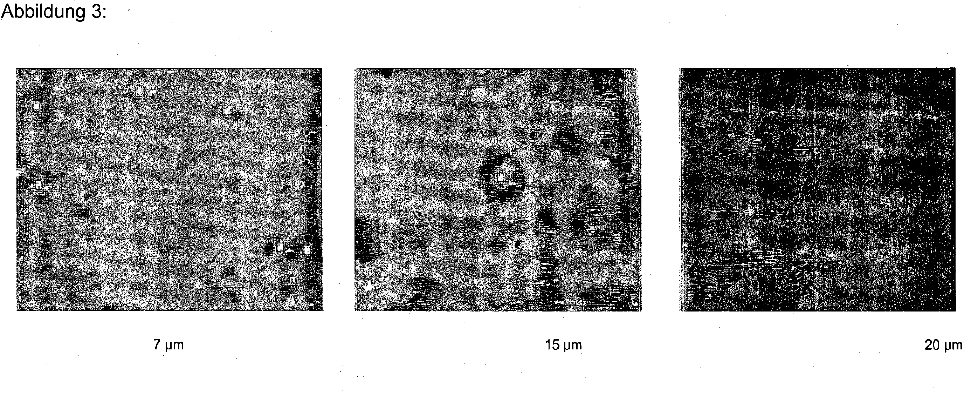

Auf einem Substrat gemäß Beispiel 2 wurde ein Beschichtungsstoff gemäß Beispiel 2 in unterschiedlichen Schichtdicken aufgetragen. Es zeigte sich, dass bei einer Schichtdicke von 7 µm zahlreiche optische Defekte in der Deckschicht durch Fremdpartikel gefunden wurden. Bei Schichtdicken von 15 µm und insbesondere 20 µm wurden Oberflächen mit sehr guter bis hervorragender Qualität erhalten, siehe Abbildung 3.

### Beispiel 4

Nachfolgend beschriebenen anwendungstechnischen Untersuchungen wurden an dem erfindungsgemäßen Kompositmaterialien durchgeführt:

Eine 2 mm dicke, nach dem erfindungsgemäßen Verfahren, mit einer kratz- und abriebfesten Beschichtung mit einem Taberwert von < 3% nach ASTM D1044, beschichtete PMMA Platte wurde einem thermischen Abkanttest (umformen um einen Winkel von 90 °) unterzogen, dabei wurde festgestellt, dass sich diese Platte mit einem Radius von 20 mm abkanten lies ohne das Risse auftraten. Die erfindungsgemäßen Kompositmaterialien können somit mit deutlich kleineren Radien abgekantet werden als nach herkömmlichen Verfahren beschichtete Platten. Die belegt die besonders gute Verbindung zwischen Substrat und Beschichtung. In mehreren Test konnte bestätigt werden, dass bei Abkantradien von Plattendicke x 10 keine Risse auftraten.

Bei Verarbeitungstest wurde gefunden, dass die erfindungsgemäßen Kompositmaterialien sehr gut gelasert, gesägt, poliert, und gebohrt werden können.

Auch im Hinblick auf das Brandverhalten wurden Fortschritte erzielt, so das Entzünden der erfindungsgemäßen Kompositmaterialien im Vergleich mit dem reinen PMMA-Substrat deutlich verzögert werden konnte.

### Bezugszeichenliste

- 1: Extruder
- 2: Extruderglättwerk (Rollen und Walzen)
- 3: Substrat
- 4: Heizeinrichtung, z. B. IR-Strahler
- 5: Oberflächenreinigungseinrichtung
- 6: Deckfolie
- 7: Deckfolienvorrat
- 8: Förder- bzw. Umlenkrollen bzw. Reinigungseinrichtung für Deckfolie bzw. Klebewalzen
- 9: Dosiereinrichtung für den Beschichtungsstoff bzw. Klebstoff
- 10: Meßpunkt Kontakttemperatur
- 11: Laminator bzw. Andruckwalzen
- 12: Kompositmaterial
- 13: 1. UV-Quelle
- 14: Deckfolienaufnahme
- 15: Entfernung Deckfolie von beschichtetem Substrat
- 16: 2. UV-Quelle
- 17: Qualitätskontrolleinrichtung
- 18: Schutzfolienvorrat
- 19: Andruckwalzen
- 20: Endprodukt

## Patentansprüche

1. Verfahren zur kontinuierlichen inline Herstellung von beschichteten polymeren Substraten oder Laminaten,
umfassend die Schritte
a. Bereitstellung eines Substrats aus einem polymeren Material
b. in Kontakt bringen des Substrats mit einem, bevorzugt mittels radikalischer Polymerisation, härtbaren Beschichtungsstoff oder Klebstoff
c. Abdecken des Beschichtungsstoffs oder Klebstoffs mit einer Deckfolie
d. Härtung des Beschichtungsstoffs oder Klebstoffs
**dadurch gekennzeichnet, dass**
• die Härtung in mindestens zwei Härtungsschritten erfolgt, wobei der erste Härtungsschritt ein thermischer oder ein
Strahlungshärtungsschritt, bevorzugt ein UV-Härtungsschritt, ist und mindestens ein nachfolgender Härtungsschritt ein Strahlungshärtungsschritt, bevorzugt ein UV-Härtungsschritt, ist,
• für den Fall, dass der erste Härtungsschritt ein
Strahlungshärtungsschritt, bevorzugt ein UV-Härtungsschritt, bzw.
ein thermischer Härtungsschritt mit verzögerter Initiierung ist, die Anlösezeit mindestens 10 s, bevorzugt 15 bis 240 s, besonders bevorzugt 20 bis 180 s und ganz besonders bevorzugt 30 bis 120 s beträgt, bzw.
• für den Fall, dass eine spontane thermische Initiierung der Aushärtung beim ersten Kontakt zwischen Beschichtungs- bzw.
Klebstoff stattfindet und dadurch der erste Härtungsschritt beginnt,
▪ die Monomermischung des Beschichtungsstoff- bzw.
Klebstoffs, bevorzugt die Kombination aus Initiator und Beschichtungsstoff- bzw. Klebstoffmonomeren und/oder die Konzentration des thermischen Initiators,
und/oder
▪ die Verfahrensbedingungen, bevorzugt die Fördergeschwindigkeit des Substrats und/oder die Kontakttemperatur,
derart gewählt werden, dass eine Mischphase aus Beschichtungs- bzw. Klebstoff und gelöstem Substratpolymer erhalten wird, deren Dicke zwischen 90 und 1%, bevorzugt zwischen 80 und 3% und ganz besonders bevorzugt zwischen 70 und 5%, der Gesamtschichtdicke der Deck- bzw. Klebeschicht entspricht.

2. Verfahren nach Anspruch 1,
**dadurch gekennzeichnet, dass**
die Kontakttemperaturen des Substrats für die jeweiligen Substratpolymere in den nachfolgenden Bereichen liegen:
| Substratpolymer | Bevorzugte Kontakttemperatur | Besonders bevorzugte Kontakttemperatur | Ganz besonders bevorzugte Kontakttemperatur |
|---|---|---|---|
| PMMA basiertes Polymer | 70 bis 110 °C | 80 bis 110 °C | 90 bis 100 °C |
| Polycarbonat basiertes Polymer | 80 bis 130 ° C | 90 bis 120 ° C | 95 bis 110 °C |
| Styrol-Acrylnitril basiertes Copolymer (SAN) | 65 bis 110 ° C | 70 bis 105 ° C | 80 bis 100 ° C |
| Polyvinylchlorid basiertes Polymer (PVC) | 60 bis 110 ° C | 70 bis 100 ° C | 75 bis 95 ° C |

3. Verfahren nach Anspruch 1 oder 2, **dadurch gekennzeichnet, dass** die Kontakttemperatur und Anlösezeit für die jeweiligen Substratpolymere in den nachfolgend genannten Bereichen liegen:
| Substratpolymer | Bevorzugte Kontakttemperatur und Anlösezeit | Besonders bevorzugte Kontakttemperat ur und Anlösezeit | Ganz besonders bevorzugte Kontakttemperatur und Anlösezeit |
|---|---|---|---|
| PMMA basiertes Polymer | 70 bis 110 °C und 15 bis 240 s | 80 bis 110 °C und 20 bis 180 s | 90 bis 100 °C und 30 bis 120 s |
| Polycarbonat basiertes Polymer | 80 bis 130 °C und 15 bis 240 s | 90 bis 120 °C und 20 bis 180 s | 95 bis 110 °C und 30 bis 120 s |
| Styrol-Acrylnitril basiertes Copolymer (SAN) | 65 bis 110 ° C und 15 bis 240 s | 70 bis 105 ° C und 20 bis 180 s | 80 bis 100°C und 30 bis 120 s |
| Polyvinylchlorid basiertes Polymer (PVC) | 60 bis 110 ° C und 15 bis 200 s | 70 bis 100 ° C und 20 bis 120 s | 75 bis 95 ° C und 30 bis 90 s |

4. Verfahren nach einem der Ansprüche 1 bis 3,
**dadurch gekennzeichnet,**
**dass** das Substrat in Schritt a) durch Extrusion einer Formmasse oder durch eine kontinuierliche Gußpolymerisation erhalten wird
und
**dass** das Substrat vor dem ersten Kontakt mit dem Beschichtungsstoff bzw. dem Klebstoff, d.h. zwischen den Schritten a) und b), durch eine geeignete Heizeinrichtung, bevorzugt einem IR-Strahler, erwärmt wird, so dass die Kontakttemperatur gemäß Anspruch 2 oder 3 erreicht wird,
und
**dass** mindestens die dem Beschichtungsstoff oder Klebstoff zugewandte Oberfläche des Substrats und/oder der Deckfolie vor dem ersten Kontakt mit dem Beschichtungsstoff bzw. dem Klebstoff, d.h. zwischen den Schritten a) und b), gereinigt wird
und
**dass** der Beschichtungsstoff bzw. Klebstoff zunächst auf die Deckfolie aufgetragen und dann mit dem Substrat in Verbindung gebracht wird, d.h. die Schritte b) und c) gemeinsam ausgeführt werden
oder
**dass** der Beschichtungsstoff bzw. Klebstoff zunächst auf das Substrat aufgebracht und dann mit der Deckfolie bedeckt wird
oder
**dass** der Beschichtungsstoff bzw. Klebstoff zunächst sowohl auf das Substrat als auch auf die Deckfolie aufgetragen und dann beiden zusammengeführt wird
und
nach dem ersten Zusammenbringen von Substrat, Beschichtungsstoff und Deckfolie der entstandene Komposit in einem Laminator oder zwischen Anpresswalzen, bevorzugt zwischen zwei Walzen, bevorzugt zwischen Walzen mit einer Shore-Härte A von 30 bis 100, verpresst wird,
und
**dass** als Deckfolie eine Opferfolie verwendet wird, welche nach dem ersten oder einem weiteren Härtungsschritt d) in Schritt e) abgezogen wird
und
**dass** eine inline optische Qualitätskontrolle in Schritt f) nach Abschluss der Schritte d) oder e) durchgeführt wird.
und
**dass** je nach dem, ob die Deckfolie abgezogen oder ein Laminat hergestellt wird, nach Abschluss der Schritte d) oder d) und e) oder d) und f) oder d) und e) und f) in Schritt g) zumindest eine Oberfläche des erhaltenen Produkts mit einer abziehbaren Schutzfolie beschichtet wird
und
**dass** die Schritte a) bis d) oder a) bis e) oder a) bis f) unter Reinraum- und/oder klimatisierten Bedingungen durchgeführt werden

5. Verfahren nach einem der Ansprüche 1 bis 4,
**dadurch gekennzeichnet,**
**dass** bei Verwendung einer Opferfolie zumindest ein Strahlungshärtungsschritt, bevorzugt ein UV-Härtungsschritt, durch die Opferfolie und/oder das Substrat und zumindest ein weiterer Strahlungshärtungsschritt, bevorzugt ein weiterer UV-Härtungsschritt, nach Entfernung der Opferfolie erfolgen.

6. Verfahren nach einem der Ansprüche 1 bis 5,
**dadurch gekennzeichnet,**
**dass** zumindest zwei Strahlungshärtungsschritte, bevorzugt zumindest mit einem UV-Härtungsschritt, bei unterschiedlichen Energieeinträgen der Strahlungsquellen bzw. bei UV-Quellen bei unterschiedlichen Wellenlängen des UV-Lichts, durchgeführt werden.

7. Verfahren nach einem der Ansprüche 1 bis 6,
**dadurch gekennzeichnet,**
**dass** die Anlösezeit durch die Fördergeschwindigkeit des Substrats oder durch die Positionierung der 1. Strahlungsquelle, bevorzugt der 1. UV Quelle in Bezug auf die Stelle des 1. Kontakts des Beschichtungsstoffs oder Klebstoffs mit dem Substrat gesteuert wird, und/oder
**dass** die Fördergeschwindigkeit des Substrats im Bereich von 0,1 bis 10 m/min liegt.

8. Verfahren nach einem der Ansprüche 1 bis 7,
**dadurch gekennzeichnet,**
**dass** es sich bei dem Substrat um einen thermoplastischen Kunststoff, ausgewählt aus der Gruppe bestehend aus Polymethylmethacrylat, Poly(meth)acrylimide, Polyacrylnitrile, Polystyrole, Polyether, Polyester, Polycarbonate, Polyvinylchloride bzw. Mischungen davon, sowie Styrol-Acrylnitril-Copolymere, Acrylnitril-Styrol-Butadien-Copolymere, Styrol-Maleinsäure-Copolymere, (Meth)acrylat-Styrol-Maleinsäureanhydrid-Copolymere und Polymethylmethacrylat-Copolymere handelt, und/oder
**dass** das Substrat eine Dicke im Bereich von 10 µm bis 500 mm, bevorzugt 20 µm bis 100 mm, besonders bevorzugt 30 µm bis 50 mm und ganz besonders bevorzugt 50 µm bis 25 mm aufweist.

9. Verfahren nach einem der Ansprüche 1 bis 8,
**dadurch gekennzeichnet,**
**dass** der Beschichtungsstoff oder Klebstoff zumindest zwei bei unterschiedlichen Wellenlängen aktivierbare Photoinitiatoren umfasst und/oder
**dass** der Beschichtungsstoff oder Klebstoff mindestens einen thermisch aktivierbaren Initiator und mindestens einen Photoinitiatoren umfasst und/oder
**dass** die Beschichtungsstoffschicht oder die Klebstoffschicht eine Schichtdicke, gemessen 20 cm nach dem Laminatorspalt, von 3 µm, bevorzugt 5 bis 100 µm, besonders bevorzugt 5 bis 80 µm, ganz besonders bevorzugt 7 bis 70 µm, speziell bevorzugt 10 bis 60 µm und ganz speziell bevorzugt 10 bis 40 µm aufweist und/oder
**dass** der Beschichtungsstoff eine dynamische Viskosität im Bereich von 50 bis 10000 mPa*s bei 25°C, bevorzugt im Bereich von 200 bis 5000 mPa*s bei 25°C aufweist,
und/oder
**dass** der Klebstoff eine dynamische Viskosität bevorzugt im Bereich von 100 bis 20000 mPa*s bei 25°C, besonders bevorzugt im Bereich von 500 bis 10000 mPa*s bei 25°C aufweist.

10. Apparatur zur kontinuierlichen inline Herstellung von beschichteten polymeren Substraten oder Laminaten,
umfassend
I. eine Einrichtung zur Bereitstellung eines Substrats aus einem polymeren Material
II. eine Einrichtung zur Bereitstellung einer Deckfolie
III. eine Einrichtung zur Beschichtung des Substrats mit einem, bevorzugt mittels radikalischer Polymerisiation, härtbaren Beschichtungsstoff oder Klebstoff
**dadurch gekennzeichnet,**
• **dass** die Apparatur derart ausgestaltet ist, dass der auf das Substrat aufgetragene Beschichtungsstoff oder Klebstoff in der Apparatur mit einer Deckfolie abgedeckt wird,
• **dass** die Apparatur derart ausgestaltet ist, dass die Härtung des Beschichtungsstoffs oder Klebstoffs in mindestens zwei Härtungsschritten erfolgt,
• **dass** die Apparatur mindestens eine Strahlungsquelle, bevorzugt mindestens eine UV-Quelle umfasst, die derart angeordnet ist, dass sie eine auf den ersten Härtungsschritt folgenden Härtungsschritt initiiert,
• **dass** die Apparatur derart ausgestaltet ist, dass die Kontakttemperatur variiert werden kann,
• **dass** die Apparatur derart ausgestaltet ist, dass die Anlösezeit, im Falle der Durchführung des ersten Härtungsschrittes mittels Strahlungshärtung, bevorzugt UV-Härtung, oder verzögert initiierter thermischer Härtung, mindestens 10 s. beträgt.

11. Apparatur nach Anspruch 10,
**dadurch gekennzeichnet,**
**dass** es sich bei der Einrichtung zur Bereitstellung des Substrats um einen Extruder, bevorzugt einen Einschneckenextruder, handelt,
oder
**dass** die Apparatur eine geeignete Heizeinrichtung, bevorzugt einem IR-Strahler, umfasst, durch die das Substrat vor dem ersten Kontakt mit dem Beschichtungsstoff bzw. dem Klebstoff, erwärmt wird, so dass die Kontakttemperatur gemäß Anspruch 1 erreicht wird,
oder
**dass** die Apparatur eine geeignete Reinigungseinrichtung, bevorzugt Klebewalzen und/oder Bürstensysteme und/oder Corona-Vorbehandlung und/oder Einrichtungen zum Abblasen mit ionisierter Luft, umfasst, durch die mindestens die dem Beschichtungsstoff oder Klebstoff zugewandte Oberfläche des Substrats und der Deckfolie vor dem ersten Kontakt mit dem Beschichtungsstoff bzw. dem Klebstoff, gereinigt wird
oder
**dass** die Apparatur derart ausgestaltet ist, dass der Beschichtungsstoff bzw. Klebstoff zunächst auf die Deckfolie aufgetragen und dann mit dem Substrat in Verbindung gebracht wird,
oder
**dass** die Apparatur derart ausgestaltet ist, dass nach dem ersten Zusammenbringen von Substrat, Beschichtungsstoff und Deckfolie der entstandene Komposit in einem Laminator oder zwischen Anpresswalzen, bevorzugt zwischen mindestens zwei Walzen, bevorzugt zwischen Walzen mit einer Shore-Härte A von 30 bis 100, verpresst wird
oder
**dass** die Apparatur eine Heizquelle, bevorzugt einen IR-Strahler, nach dem Kontaktpunkt von Beschichtungsstoff bzw. Klebstoff und Substrat, bevorzugt nach dem Laminator, umfasst
oder
**dass** die Apparatur derart ausgestaltet ist, dass die als Deckfolie verwendete Opferfolie nach dem ersten oder einem weiteren Strahlungshärtungsschritt, bevorzugt UV-Härtungsschritt, abgezogen wird
oder
**dass** die Apparatur eine inline optische Qualitätskontrolle, bevorzugt in Form von einer Kamera- und Detektionssystems für optische Fehler umfasst, welche bevorzugt derart angeordnet ist, dass die Qualitätskontrolle in Schritt f) nach Abschluss der Schritte d) oder e) durchgeführt wird
oder
**dass** die Apparatur derart ausgestaltet ist, dass zumindest eine Oberfläche des erhaltenen Produkts mit einer abziehbaren Schutzfolie beschichtet wird, wobei die Beschichtungseinrichtung mit der Schutzfolie bevorzugt derart angeordnet ist, dass je nach dem, ob die Deckfolie abgezogen oder ein Laminat hergestellt wird, die Schutzfolie nach Abschluss der Schritte d) oder d) und e) oder d) und f) oder d) und e) und f) in Schritt g) aufgebracht wird.
oder
**dass** Apparatur derart ausgestaltet ist, dass die Schritte a) bis d) oder a) bis e) oder a) bis f) unter Reinraum- und/oder klimatisierten Bedingungen durchgeführt werden.

12. Apparatur nach Anspruch 10 oder 11,
**dadurch gekennzeichnet,**
**dass** es sich bei der Einrichtung zur Bereitstellung des Substrats um einen Extruder, bevorzugt einen Einschneckenextruder, handelt,
und
**dass** die Apparatur derart ausgestaltet ist, dass nach dem ersten Zusammenbringen von Substrat, Beschichtungsstoff und Deckfolie der entstandene Komposit in einem Laminator oder zwischen Anpresswalzen, bevorzugt zwischen mindestens zwei Walzen, bevorzugt zwischen Walzen mit einer Shore-Härte A von 30 bis 100, verpresst wird
und
**dass** die Apparatur eine inline optische Qualitätskontrolle, bevorzugt in Form von einer Kamera- und Detektionssystems für optische Fehler umfasst, welche bevorzugt derart angeordnet ist, dass die Qualitätskontrolle in Schritt f) nach Abschluss der Schritte d) oder e) durchgeführt wird.

13. Apparatur nach einem der Ansprüche 10 bis 12,
**dadurch gekennzeichnet,**
**dass** es sich bei der Einrichtung zur Bereitstellung des Substrats um
einen Extruder, bevorzugt einen Einschneckenextruder, handelt,
und
**dass** die Apparatur eine geeignete Heizeinrichtung, bevorzugt einem IR-Strahler, umfasst, durch die das Substrat vor dem ersten Kontakt mit dem Beschichtungsstoff bzw. dem Klebstoff, erwärmt wird, so dass die Kontakttemperatur gemäß Anspruch 1 erreicht wird,
und
**dass** die Apparatur eine geeignete Reinigungseinrichtung, bevorzugt Klebewalzen und/oder Bürstensysteme und/oder Corona-Vorbehandlung und/oder Einrichtungen zum Abblasen mit ionisierter Luft, umfasst, durch die mindestens die dem Beschichtungsstoff oder Klebstoff zugewandte Oberfläche des Substrats und der Deckfolie vor dem ersten Kontakt mit dem Beschichtungsstoff bzw. dem Klebstoff, gereinigt wird
und
**dass** die Apparatur derart ausgestaltet ist, dass der Beschichtungsstoff bzw. Klebstoff zunächst auf die Deckfolie aufgetragen und dann mit dem Substrat in Verbindung gebracht wird,
und
**dass** die Apparatur derart ausgestaltet ist, dass nach dem ersten Zusammenbringen von Substrat, Beschichtungsstoff und Deckfolie der entstandene Komposit in einem Laminator oder zwischen Anpresswalzen, bevorzugt zwischen mindestens zwei Walzen, bevorzugt zwischen Walzen mit einer Shore-Härte A von 30 bis 100, verpresst wird
und
**dass** die Apparatur derart ausgestaltet ist, dass die als Deckfolie verwendete Opferfolie nach dem ersten oder einem weiteren Strahlungshärtungsschritt, bevorzugt UV-Härtungsschritt, abgezogen wird
und
**dass** die Apparatur eine inline optische Qualitätskontrolle, bevorzugt in Form von einer Kamera- und Detektionssystems für optische Fehler umfasst, welche bevorzugt derart angeordnet ist, dass die Qualitätskontrolle in Schritt f) nach Abschluss der Schritte d) oder e) durchgeführt wird
und
**dass** die Apparatur derart ausgestaltet ist, dass zumindest eine Oberfläche des erhaltenen Produkts mit einer abziehbaren Schutzfolie beschichtet wird, wobei die Beschichtungseinrichtung mit der Schutzfolie bevorzugt derart angeordnet ist, dass je nach dem, ob die Deckfolie abgezogen oder ein Laminat hergestellt wird, die Schutzfolie nach Abschluss der Schritte d) oder d) und e) oder d) und f) oder d) und e) und f) in Schritt g) aufgebracht wird.
und
**dass** Apparatur derart ausgestaltet ist, dass die Schritte a) bis d) oder a) bis e) oder a) bis f) unter Reinraum- und/oder klimatisierten
Bedingungen durchgeführt werden.

14. Apparatur nach einem der Ansprüche 10 bis 13,
**dadurch gekennzeichnet,**
**dass** die Strahlungsquellen, bevorzugt die UV-Quellen, in der Apparatur derart angeordnet sind, dass bei Verwendung einer Opferfolie zumindest ein Strahlungshärtungsschritt, bevorzugt mindestens ein UV-Härtungsschritt durch die Deckfolie und/oder durch das Substrat und zumindest ein Strahlungshärtungsschritt, bevorzugt mindest ein UV-Härtungsschritt, nach Entfernung der Deckfolie erfolgt
oder
**dass** die Apparatur eine Heizquelle zur Initiierung des ersten Härtungsschrittes umfasst
oder
**dass** die Apparatur zumindest zwei Strahlungsquellen, bevorzugt mindestens zwei UV-Quellen, mit unterschiedlichen Energieeinträgen der Strahlungsquellen bzw. bei mindestens zwei UV-Quellen mit unterschiedlichen Wellenlängen des UV-Lichts umfasst.

15. Apparatur nach einem der Ansprüche 10 bis 14,
**dadurch gekennzeichnet,**
**dass** die Apparatur derart ausgestaltet ist, dass, im Falle der Durchführung des ersten Härtungsschrittes per Strahlungshärtung, bevorzugt per UV-Härtung, die Anlösezeit durch die Regulierung der Fördergeschwindigkeit des Substrats oder durch die Positionierung der 1. Strahlungsquelle, bevorzugt der 1. UV Quelle in Bezug auf die Stelle des 1. Kontakts des Beschichtungsstoffs oder Klebstoffs mit dem Substrat gesteuert wird, bevorzugt derart, dass die Anlösezeit im Bereich von mehr als 10 s, bevorzugt von 15 bis 240 s, besonders bevorzugt 20 bis 180 s und ganz besonders bevorzugt 30 bis 120 s, variiert werden kann,
und/oder
**dass** die Apparatur derart ausgestaltet ist, dass die Fördergeschwindigkeit des Substrats im Bereich von 0,1 m/min bis 10 m/min liegt.

16. Apparatur nach einem der Ansprüche 10 bis 15,
**dadurch gekennzeichnet,**
**dass** ein Substrat eine Dicke von 10 µm bis 500 mm, bevorzugt 20 µm bis 100 mm, besonders bevorzugt 30 µm bis 50 mm und ganz besonders bevorzugt 50 µm bis 25 mm bereitgestellt wird.

17. Kompositmaterial umfassend eine Deckschicht und ein Substrat oder ein Substrat, eine Klebeschicht und eine weitere auf der Klebeschicht angeordneten Schicht,
**dadurch gekennzeichnet,**
**dass** in der Deck- bzw. Klebeschicht eine Phasengrenze zwischen einer äußeren Phase, mit geringem Anteil an gelöstem Substratpolymer, und einer Mischphase, mit einem gegenüber der äußeren Phase erhöhten Anteil an gelöstem Substratpolymer, existiert und dass es eine Phasengrenze zwischen der Mischphase und dem Substrat aufweist.

18. Kompositmaterial nach Anspruch 17,
**dadurch gekennzeichnet, dass**
die Dicke der äußeren Phase zwischen 30 und 95%, besonders bevorzugt zwischen 40 und 90 % und ganz besonders bevorzugt zwischen 50 und 80% der Gesamtdicke der Deck- bzw. Klebeschicht und die Dicke der Mischphase entsprechend zwischen 70 und 5%, bevorzugt zwischen 60 und 10% und ganz besonders bevorzugt zwischen 50 und 20% ausmachen, wobei die beiden Phasen in Summe 100% der Gesamtschichtdicke der Deck- bzw. Klebeschicht ergeben.

## Claims

1. Method for the continuous inline production of coated polymeric substrates or laminates,
comprising the steps of
a. providing a substrate made of a polymeric material
b. contacting the substrate with a curable -
preferably by means of radical polymerization - coating material or adhesive
c. lining the coating material or adhesive with an outer film
d. curing the coating material or adhesive, **characterized in that**
• the curing takes place in at least two curing steps, the first curing step being a thermal or a radiation curing step, preferably a UV curing step, and at least one subsequent curing step being a radiation curing step, preferably a UV curing step,
• where the first curing step is a radiation curing step, preferably a UV curing step, or is a thermal curing step with delayed initiation, the incipient dissolution time is at least 10 s, preferably 15 to 240 s, more preferably 20 to 180 s and very preferably 30 to 120 s, or
• where there is spontaneous thermal initiation of curing on first contact between coating material or adhesive and consequently the first curing step begins,
▪ the monomer mixture of the coating material or adhesive, preferably the combination of initiator and coating material monomers or adhesive monomers and/or the concentration of the thermal initiator,
and/or
▪ the method conditions, preferably the conveying rate of the substrate and/or the contact temperature,
are selected such as to obtain a mixed phase of coating material or adhesive and dissolved substrate polymer, the thickness of this phase corresponding to between 90% and 1%, preferably between 80% and 3% and very preferably between 70% and 5% of the total layer thickness of the outer layer or adhesive layer.

2. Method according to Claim 1,
**characterized in that**
the contact temperatures of the substrate for the respective substrate polymers are situated within the following ranges:
| Substrate polymer | Preferred contact temperature | More preferred contact temperature | Very preferred contact temperature |
|---|---|---|---|
| PMMA-based polymer | 70 to 110 °C | 80 to 110 °C | 90 to 100 °C |
| Polycarbonate-based polymer | 80 to 130 ° C | 90 to 120 ° C | 95 to 110 ° C |
| Styreneacrylonitrile-based copolymer (SAN) | 65 to 110 ° C | 70 to 105 ° C | 80 to 100 ° C |
| Polyvinyl chloride-based polymer (PVC) | 60 to 110 ° C | 70 to 100 ° C | 75 to 95 ° C |

3. Method according to Claim 1 or 2, **characterized in that**
the contact temperature and incipient dissolution time for the respective substrate polymers are situated within the ranges specified below:
| Substrate polymer | Preferred contact temperature and incipient dissolution time | More preferred contact temperature and incipient dissolution time | Very preferred contact temperature and incipient dissolution time |
|---|---|---|---|
| PMMA-based polymer | 70 to 110 °C and 15 to 240 s | 80 to 110 °C and 20 to 180 s | 90 to 100 °C and 30 to 120 s |
| Polycarbonate-based polymer | 80 to 130 °C and 15 to 240 s | 90 to 120 °C and 20 to 180 s | 95 to 110 °C and 30 to 120 s |
| Styreneacrylonitrile-based copolymer (SAN) | 65 to 110 ° C and 15 to 240 s | 70 to 105 ° C and 20 to 180 s | 80 to 100 ° C and 30 to 120 s |
| Polyvinyl chloride-based polymer (PVC) | 60 to 110 ° C and 15 to 200 s | 70 to 100 ° C and 20 to 120 s | 75 to 95 ° C and 30 to 90 s |

4. Method according to any of Claims 1 to 3, **characterized**
**in that** the substrate in step a) is attained by extrusion of a moulding composition or by a continuous cast polymerization and
**in that** the substrate, prior to first contact with the coating material or adhesive, i.e. between steps a) and b), is heated by a suitable heating means, preferably a radiant IR heater, to attain the contact temperature according to Claim 2 or 3,
and
**in that** at least that surface of the substrate and/or of the outer film that faces the coating material or adhesive, prior to first contact with the coating material or adhesive, i.e. between steps a) and b), is cleaned
and
**in that** the coating material or adhesive is first applied to the outer film and then brought into communication with the substrate, i.e. steps b) and c) are performed jointly
or
**in that** the coating material or adhesive is first applied to the substrate and then covered with the outer film
or
**in that** the coating material or adhesive is first applied both to the substrate and to the outer film and then the two are brought together
and
after substrate, coating material and outer film have been brought together for the first time, the resulting composite is compressed in a laminator or between nip rolls, preferably between two rolls, preferably between rolls having a Shore A hardness of 30 to 100,
and
**in that** use is made as outer film of a sacrificial film, which is removed after the first or a further curing step d) in step e)
and
**in that** an inline optical quality control is carried out in step f) after the end of steps d) or e)
and
**in that**, depending whether the outer film is removed or a laminate is produced, after the end of steps d) or d) and e) or d) and f) or d) and e) and f), in step g), at least one surface of the resulting product is coated with a removable protective film and
**in that** steps a) to d) or a) to e) or a) to f) are carried out under clean-room conditions and/or controlled-climate conditions.

5. Method according to any of Claims 1 to 4, **characterized**
**in that**, when a sacrificial film is used, at least one radiation curing step, preferably a UV curing step, takes place through the sacrificial film and/or the substrate and at least one further radiation curing step, preferably a further UV curing step, takes place after removal of the sacrificial film.

6. Method according to any of Claims 1 to 5, **characterized**
**in that** at least two radiation curing steps, preferably at least with one UV curing step are carried out, with different energy inputs of the radiation sources or with UV sources with different wavelengths of the UV light.

7. Method according to any of Claims 1 to 6, **characterized**
**in that** the incipient dissolution time is controlled by the conveying speed of the substrate or by the positioning of the 1^{st} radiation source, preferably of the 1^{st} UV source in relation to the position of the 1^{st} contact of the coating material or adhesive with the substrate,
and/or
**in that** the conveying speed of the substrate is within the range from 0.1 to 10 m/min.

8. Method according to any of Claims 1 to 7, **characterized**
**in that** the substrate is a thermoplastic polymer selected from the group consisting of polymethyl methacrylate, poly(meth)acrylimides, polyacrylonitriles, polystyrenes, polyethers, polyesters, polycarbonates, polyvinyl chlorides and mixtures thereof, and also styreneacrylonitrile copolymers, acrylonitrile-styrene-butadiene copolymers, styrene-maleic acid copolymers, (meth)acrylate-styrene-maleic anhydride copolymers and polymethyl methacrylate copolymers,
and/or
**in that** the substrate has a thickness in the range from 10 µm to 500 mm, preferably 20 µm to 100 mm, more preferably 30 µm to 50 mm and very preferably 50 µm to 25 mm.

9. Method according to any of Claims 1 to 8, **characterized**
**in that** the coating material or adhesive comprises at least two photoinitiators which are activatable at different wavelengths and/or
**in that** the coating material or adhesive comprises at least one thermally activatable initiator and at least one photoinitiator and/or
**in that** the coating material layer or adhesive layer has a layer thickness, measured 20 cm after the laminator gap, of 3 µm, preferably 5 to 100 µm, more preferably 5 to 80 µm, very preferably 7 to 70 µm, especially preferably 10 to 60 µm and very especially preferably 10 to 40 µm and/or
**in that** the coating material has a dynamic viscosity in the range from 50 to 10 000 mPa*s at 25°C, preferably in the range from 200 to 5000 mPa*s at 25°C and/or
**in that** the adhesive has a dynamic viscosity preferably in the range from 100 to 20 000 mPa*s at 25°C, more preferably in the range from 500 to 10 000 mPa*s at 25°C.

10. Apparatus for continuous inline production of coated polymeric substrates or laminates, comprising
I. a means for providing a substrate comprising a polymeric material
II. a means for providing an outer film
III. a means for coating the substrate with a curable - preferably by means of radical polymerization - coating material or adhesive,
**characterized**
• **in that** the apparatus is designed such that the coating material or adhesive applied to the substrate is lined in the apparatus with an outer film,
• **in that** the apparatus is designed such that the curing of the coating material or adhesive takes place in at least two curing steps,
• **in that** the apparatus comprises at least one radiation source, preferably at least one UV source, which is disposed in such a way that it initiates a curing step following on from the first curing step,
• **in that** the apparatus is designed such that the contact temperature can be varied,
• **in that** the apparatus is designed such that the incipient dissolution time, in the case where the first curing step is carried out by means of radiation curing, preferably UV curing, or of thermal curing initiated with a delay, is at least 10 s.

11. Apparatus according to Claim 10, **characterized**
**in that** the means for providing the substrate is an extruder, preferably a single-screw extruder,
or
**in that** the apparatus comprises a suitable heating means, preferably a radiant IR lamp, which heats the substrate prior to first contact with the coating material or adhesive, so that the contact temperature according to Claim 1 is attained,
or
**in that** the apparatus comprises a suitable cleaning means, preferably adhesive rolls and/or brush systems and/or corona pretreatment and/or means for blow removal with ionized air, which cleans at least that surface of the substrate and of the outer film which is facing the coating material or adhesive, prior to first contact with the coating material or adhesive,
or
**in that** the apparatus is designed such that the coating material or adhesive is first applied to the outer film and then brought into communication with the substrate,
or
**in that** the apparatus is designed such that after substrate, coating material and outer film have been first brought together, the resultant composite is pressed in a laminator or between pressure application rolls, preferably between at least two rolls, preferably between rolls having a Shore hardness A of 30 to 100,
or
**in that** the apparatus comprises a heating source, preferably a radiant IR lamp, after the contact point of coating material or adhesive with substrate, preferably after the laminator
or
**in that** the apparatus is designed such that the sacrificial film used as outer film is removed after the first or a further radiation curing step, preferably UV curing step
or
**in that** the apparatus has an inline optical quality control, preferably in the form of a camera and detection system for optical errors, which is preferably arranged such that the quality control is carried out in step f) after the end of steps d) or e)
or
**in that** the apparatus is designed such that at least one surface of the resulting product is coated with a removable protective film, the coating means with the protective film being arranged preferably such that, according to whether the outer film is removed or a laminate is produced, the protective film is applied in step g), after the end of steps d) or d) and e) or d) and f) or d) and e) and f)
or
**in that** the apparatus is designed such that steps a) to d) or a) to e) or a) to f) are carried out under clean-room conditions and/or controlled-climate conditions.

12. Apparatus according to Claim 10 or 11, **characterized**
**in that** the means for providing the substrate is an extruder, preferably a single-screw extruder,
and
**in that** the apparatus is designed such that after substrate, coating material and outer film have been first brought together, the resultant composite is pressed in a laminator or between pressure application rolls, preferably between at least two rolls, preferably between rolls having a Shore hardness A of 30 to 100,
and
**in that** the apparatus has an inline optical quality control, preferably in the form of a camera and detection system for optical errors, which is preferably arranged such that the quality control is carried out in step f) after the end of steps d) or e).

13. Apparatus according to any of Claims 10 or 12, **characterized**
**in that** the means for providing the substrate is an extruder, preferably a single-screw extruder,
and
**in that** the apparatus comprises a suitable heating means, preferably a radiant IR lamp, which heats the substrate prior to first contact with the coating material or adhesive, so that the contact temperature according to Claim 1 is attained,
and
**in that** the apparatus comprises a suitable cleaning means, preferably adhesive rolls and/or brush systems and/or corona pretreatment and/or means for blow removal with ionized air, which cleans at least that surface of the substrate and of the outer film which is facing the coating material or adhesive, prior to first contact with the coating material or adhesive,
and
**in that** the apparatus is designed such that the coating material or adhesive is first applied to the outer film and then brought into communication with the substrate,
and
**in that** the apparatus is designed such that after substrate, coating material and outer film have been first brought together, the resultant composite is pressed in a laminator or between pressure application rolls, preferably between at least two rolls, preferably between rolls having a Shore hardness A of 30 to 100,
and
**in that** the apparatus is designed such that the sacrificial film used as outer film is removed after the first or a further radiation curing step, preferably UV curing step
and
**in that** the apparatus has an inline optical quality control, preferably in the form of a camera and detection system for optical errors, which is preferably arranged such that the quality control is carried out in step f) after the end of steps d) or e)
and
**in that** the apparatus is designed such that at least one surface of the resulting product is coated with a removable protective film, the coating means with the protective film being arranged preferably such that, according to whether the outer film is removed or a laminate is produced, the protective film is applied in step g), after the end of steps d) or d) and e) or d) and f) or d) and e) and f)
and
**in that** the apparatus is designed such that steps a) to d) or a) to e) or a) to f) are carried out under clean-room conditions and/or controlled-climate conditions.

14. Apparatus according to any of Claims 10 to 13, **characterized**
**in that** the radiation sources, preferably the UV sources, in the apparatus are arranged such that, when a sacrificial film is used, at least one radiation curing step, preferably at least one UV curing step, takes place through the outer film and/or through the substrate and at least one radiation curing step, preferably at least one UV curing step, takes place after removal of the outer film
or
**in that** the apparatus comprises a heating source for initiating the first curing step
or
**in that** the apparatus comprises at least two radiation sources, preferably at least two UV sources, with different energy inputs of the radiation sources or with at least two UV sources with different wavelengths of the UV light.

15. Apparatus according to any of Claims 10 to 14, **characterized**
**in that** the apparatus is designed such that, where the first curing step is carried out by radiation curing, preferably by UV curing, the incipient dissolution time is controlled by regulation of the conveying speed of the substrate or by positioning of the 1^{st} radiation source, preferably of the 1^{st} UV source in relation to the position of 1^{st} contact of the coating material or adhesive with the substrate, preferably such that the incipient dissolution time can be varied in the range of more than 10 s, preferably of 15 to 240 s, more preferably 20 to 180 s and very preferably 30 to 120 s,
and/or
**in that** the apparatus is designed such that the conveying speed of the substrate is in the range from 0.1 m/min to 10 m/min.

16. Apparatus according to any of Claims 10 to 15, **characterized**
**in that** a substrate having a thickness of 10 µm to 500 mm, preferably 20 µm to 100 mm, more preferably 30 µm to 50 mm and very preferably 50 µm to 25 mm is provided.

17. Composite material comprising an outer layer and a substrate or comprising a substrate, an adhesive layer and a further layer arranged on the adhesive layer,
**characterized**
**in that** in the outer layer or adhesive layer there is a phase boundary between an external phase, with a small fraction of dissolved substrate polymer, and a mixed phase, having an increased fraction of dissolved substrate polymer as compared with the external phase, and in that the material has a phase boundary between the mixed phase and the substrate.

18. Composite material according to Claim 17, **characterized in that**
the thickness of the external phase comes to between 30% and 95%, more preferably between 40% and 90% and very preferably between 50% and 80% of the total thickness of the outer layer or adhesive layer, and the thickness of the mixed phase, correspondingly, comes to between 70% and 5%, preferably between 60% and 10% and very preferably between 50% and 20%, the two phases in total making 100% of the total layer thickness of the outer layer or adhesive layer.

## Revendications

1. Procédé pour la fabrication continue en ligne de substrats ou de stratifiés polymères revêtus, comprenant les étapes consistant à
a. mettre à disposition un substrat en un matériau polymère
b. mettre en contact le substrat avec un matériau de revêtement ou un adhésif durcissable, de préférence au moyen d'une polymérisation par voie radicalaire,
c. recouvrir le matériau de revêtement ou l'adhésif par une feuille de recouvrement
d. durcir le matériau de revêtement ou l'adhésif **caractérisé en ce que**
- le durcissement a lieu en au moins deux étapes de durcissement, la première étape de durcissement étant une étape de durcissement thermique ou par rayonnement, de préférence une étape de durcissement aux UV et au moins une étape de durcissement consécutive étant une étape de durcissement par rayonnement, de préférence une étape de durcissement aux UV,
- pour le cas où la première étape de durcissement est une étape de durcissement par rayonnement, de préférence une étape de durcissement aux UV, ou une étape de durcissement thermique avec une initiation retardée, le temps de dissolution est d'au moins 10 s, de préférence de 15 à 240 s, de manière particulièrement préférée de 20 à 180 s et de manière tout particulièrement préféré de 30 à 120 s, ou
- pour le cas où une initiation thermique spontanée du durcissement a lieu lors du premier contact entre le matériau de revêtement ou l'adhésif et que la première étape de durcissement démarre de ce fait,
- le mélange de monomères du matériau de revêtement ou de l'adhésif, de préférence la combinaison de l'initiateur et des monomères du matériau de revêtement ou de l'adhésif et/ou la concentration en initiateur thermique et/ou
- les conditions de procédé, de préférence la vitesse de transport du substrat et/ou la température de contact,
sont choisis de manière telle qu'on obtient une phase mixte de matériau de revêtement ou d'adhésif et de polymère de substrat dissous dont l'épaisseur correspond à entre 90 et 1%, de préférence entre 80 et 3% et de manière tout particulièrement préférée entre 70 et 5% de l'épaisseur de couche totale de la couche de recouvrement ou adhésive.

2. Procédé selon la revendication 1, **caractérisé en ce que** les températures de contact du substrat pour les différents polymères de substrat se situent dans les plaques suivantes :
| Polymère de substrat | Température de contact préférée | Température de contact particulièrement préférée | Température de contact tout particulièrement préférée |
|---|---|---|---|
| Polymère à base de PMMA | 70 à 110°C | 80 à 110°C | 90 à 100°C |
| Polymère à base de polycarbonate | 80 à 130°C | 90 à 120°C | 95 à 110°C |
| Copolymère à base de styrène-acrylonitrile (SAN) | 65 à 110°C | 70 à 105°C | 80 à 100°C |
| Polymère à base de poly(chlorure de vinyle) (PVC) | 60 à 110°C | 70 à 100°C | 75 à 95°C |

3. Procédé selon la revendication 1 ou 2, **caractérisé en ce que** la température de contact et le temps de dissolution pour les différents polymères de substrat se situent dans les plages mentionnées ci-après :
| Polymère de substrat | Température de contact et temps de dissolution préférés | Température de contact et temps de dissolution particulièrement préférés | Température de contact et temps de dissolution tout particulièrement préférés |
|---|---|---|---|
| Polymère à base de PMMA | 70 à 110°C et 15 à 240 s | 80 à 110°C et 20 à 180 s | 90 à 100°C et 30 à 120 s |
| Polymère à base de polycarbonate | 80 à 130°C et 15 à 240s s | 90 à 120°C et 20 à 180s s | 95 à 110°C et 30 à 120 s |
| Copolymère à base de styrène-acrylonitrile (SAN) | 65 à 110°C et 15 à 240 s | 70 à 105°C et 20 à 180 s | 80 à 100°C et 30 à 120 s |
| Polymère à base de poly(chlorure de vinyle) (PVC) | 60 à 110°C et 15 à 200 s | 70 à 100°C et 20 à 120 s | 75 à 95°C et 30 à 90 s |

4. Procédé selon l'une quelconque des revendications 1 à 3, **caractérisé en ce que** le substrat dans l'étape a) est obtenu par extrusion d'une masse de moulage ou par une polymérisation continue par coulée et **en ce que** le substrat est chauffé avant le premier contact avec le matériau de revêtement ou avec l'adhésif, c'est-à-dire entre les étapes a) et b), par un dispositif de chauffage approprié, de préférence un émetteur d'IR, de telle sorte que la température de contact selon la revendication 2 ou 3 est atteinte et **en ce qu'**au moins la surface du substrat et/ou de la feuille de recouvrement orientée vers le matériau de revêtement ou l'adhésif est nettoyée avant le premier contact avec le matériau de revêtement ou l'adhésif, c'est-à-dire entre les étapes a) et b) et **en ce que** le matériau de revêtement ou l'adhésif est d'abord appliqué sur la feuille de recouvrement puis assemblé avec le substrat, c'est-à-dire que les étapes b) et c) sont réalisées ensemble ou **en ce que** le matériau de revêtement ou l'adhésif est d'abord appliqué sur le substrat puis recouvert par la feuille de recouvrement, ou **en ce que** le matériau de revêtement ou l'adhésif est d'abord appliqué tant sur le substrat que sur la feuille de recouvrement, puis les deux sont assemblés et
le composite formé après la réunion du substrat, du matériau de revêtement et de la feuille de recouvrement est pressé dans un dispositif de laminage ou entre des cylindres de pressage, de préférence entre deux cylindres, de préférence entre des cylindres présentant une dureté Shore A de 30 à 100 et **en ce qu'**une feuille sacrificielle est utilisée comme feuille de recouvrement qui est enlevée après la première ou une autre étape de durcissement d) dans l'étape e) et **en ce qu'**un contrôle de qualité optique en ligne est réalisé dans l'étape f) après la fin des étapes d) ou e) et **en ce qu'**en fonction de l'élimination de la feuille de recouvrement ou de la fabrication d'un stratifié, après la fin des étapes d) ou d) et e) ou d) et f) ou d) et e) et f), dans l'étape g), on revêt au moins une surface du produit obtenu d'une feuille de protection pouvant être retirée et **en ce que** les étapes a) à d) ou a) à e) ou a) à f) sont réalisées dans des conditions de salle blanche et/ou climatisées.

5. Procédé selon l'une quelconque des revendications 1 à 4, **caractérisé en ce que** lors de l'utilisation d'une feuille sacrificielle, au moins une étape de durcissement par rayonnement, de préférence une étape de durcissement aux UV, est réalisée au travers de la feuille sacrificielle et/ou du substrat et au moins une autre étape de durcissement par rayonnement, de préférence une autre étape de durcissement aux UV, est réalisée après l'élimination de la feuille sacrificielle.

6. Procédé selon l'une quelconque des revendications 1 à 5, **caractérisé en ce qu'**au moins deux étapes de durcissement par rayonnement, présentant de préférence au moins une étape de durcissement aux UV, sont réalisées à des énergies introduites différentes des sources de rayonnement ou par des sources d'UV à des longueurs d'onde différentes de la lumière UV.

7. Procédé selon l'une quelconque des revendications 1 à 6, **caractérisé en ce que** le temps de dissolution est régulé par la vitesse de transport du substrat ou par le positionnement de la 1ère source de rayonnement, de préférence de la 1ère source d'UV par rapport au site du 1er contact du matériau de revêtement ou de l'adhésif avec le substrat et/ou **en ce que** la vitesse de transport du substrat se situe dans la plage de 0,1 à 10 m/min.

8. Procédé selon l'une quelconque des revendications 1 à 7, **caractérisé en ce qu'**il s'agit, pour le substrat, d'un matériau synthétique thermoplastique, choisi dans le groupe constitué par le poly((méth)acrylate de méthyle), les poly(méth)acrylimides, les polyacrylonitriles, les polystyrènes, les polyéthers, les polyesters, les polycarbonates, les poly(chlorures de vinyle) ou leurs mélanges, ainsi que les copolymères de styrène-acrylonitrile, les copolymères d'acrylonitrile-styrène-butadiène, les copolymères de styrène-acide maléique, les copolymères de (méth)acrylate-styrène-acide maléique et les copolymères de poly((méth)acrylate de méthyle) et/ou **en ce que** le substrat présente une épaisseur dans la plage de 10 µm à 500 mm, de préférence de 20 µm à 100 mm, de manière particulièrement préférée de 30 µm à 50 mm, de manière tout particulièrement préférée de 50 µm à 25 mm.

9. Procédé selon l'une quelconque des revendications 1 à 8, **caractérisé en ce que** le matériau de revêtement ou l'adhésif comprend au moins deux photo-initiateurs activables à des longueurs d'onde différentes et/ou **en ce que** le matériau de revêtement ou l'adhésif comprend au moins un initiateur activable par voie thermique et au moins un photo-initiateur et/ou **en ce que** la couche de matériau de revêtement ou la couche adhésive présente une épaisseur de couche, mesurée 20 cm en aval de la fente de laminage, de 3 µm, de préférence de 5 à 100 µm, de manière particulièrement préférée de 5 à 80 µm, de manière tout particulièrement préférée de 7 à 70 µm, particulièrement de préférence de 10 à 60 µm et tout particulièrement de préférence de 10 à 40 µm et/ou **en ce que** le matériau de revêtement présente une viscosité dynamique dans la plage de 50 à 10 000 mPa.s à 25°C, de préférence dans la plage de 200 à 5000 mPa.s à 25°C, et/ou **en ce que** l'adhésif présente une viscosité dynamique de préférence dans la plage de 100 à 20 000 mPa.s à 25°C, de manière particulièrement préférée dans la plage de 500 à 10 000 mPa.s à 25°C.

10. Appareil pour la fabrication continue en ligne de substrats polymères revêtus ou de stratifiés, comprenant
I. un dispositif pour mettre à disposition un substrat en un matériau polymère
II. un dispositif pour mettre à disposition une feuille de recouvrement
III. un dispositif pour le revêtement du substrat par un matériau de revêtement ou un adhésif durcissable, de préférence au moyen d'une polymérisation par voie radicalaire,
**caractérisé**
- **en ce que** l'appareil est conçu de manière telle que le matériau de revêtement ou l'adhésif appliqué sur le substrat est revêtu dans l'appareil par une feuille de recouvrement,
- **en ce que** l'appareil est conçu de manière telle que le durcissement du matériau de revêtement ou de l'adhésif est réalisé en au moins deux étapes de durcissement,
- **en ce que** l'appareil comprend au moins une source de rayonnement, de préférence au moins une source d'UV, qui est disposée de manière telle qu'elle initie une étape de durcissement consécutive à la première étape de durcissement,
- **en ce que** l'appareil est conçu de manière telle que la température de contact peut être variée,
- **en ce que** l'appareil est conçu de manière telle que le temps de dissolution, dans le cas de la réalisation de la première étape de durcissement au moyen d'un durcissement par rayonnement, de préférence un durcissement aux UV, ou d'un durcissement thermique initié de manière retardée, est d'au moins 10 s.

11. Appareil selon la revendication 10, **caractérisé en ce qu'**il s'agit, pour le dispositif pour la mise à disposition du substrat, d'une extrudeuse, de préférence d'une extrudeuse monovis ou **en ce que** l'appareil comprend un dispositif de chauffage approprié, de préférence un émetteur d'IR, par lequel le substrat est chauffé avant le premier contact avec le matériau de revêtement ou l'adhésif, de telle sorte que la température de contact selon la revendication 1 est atteinte ou **en ce que** l'appareil comprend un dispositif de nettoyage approprié, de préférence des cylindres adhésifs et/ou des systèmes à brosse et/ou un prétraitement au Corona et/ou des dispositifs pour souffler de l'air ionisé, par lequel au moins la surface du substrat ou de la feuille de recouvrement orientée vers le matériau de revêtement ou l'adhésif est nettoyée avant le premier contact avec le matériau de revêtement ou l'adhésif ou **en ce que** l'appareil est conçu de manière telle que le matériau de revêtement ou l'adhésif est d'abord appliqué sur la feuille de recouvrement puis assemblé avec le substrat, ou **en ce que** l'appareil est conçu de manière telle que le composite formé après la réunion du substrat, du matériau de revêtement et de la feuille de recouvrement est pressé dans un dispositif de laminage ou entre des cylindres de pressage, de préférence entre au moins deux cylindres, de préférence entre des cylindres présentant une dureté Shore A de 30 à 100 ou **en ce que** l'appareil comprend une source de chauffage, de préférence un émetteur d'IR, en aval du point de contact du matériau de revêtement ou de l'adhésif et du substrat, de préférence en aval du dispositif de laminage ou **en ce que** l'appareil est conçu de manière telle que la feuille sacrificielle utilisée comme feuille de recouvrement est retirée après la première ou une autre étape de durcissement par rayonnement, de préférence une étape de durcissement aux UV ou **en ce que** l'appareil comprend un contrôle optique en ligne de la qualité, de préférence sous forme d'un système de caméra et de détection pour des défauts optiques, qui est de préférence disposé de manière telle que le contrôle de la qualité est réalisé dans l'étape f) après la fin des étapes d) ou e) ou **en ce que** l'appareil est conçu de manière telle qu'au moins une surface du produit obtenu est revêtue d'une feuille de protection pouvant être retirée, le dispositif de revêtement par la feuille de protection étant de préférence disposé de manière telle qu'en fonction de l'élimination de la feuille de recouvrement ou de la fabrication d'un stratifié, la feuille de protection est appliquée après la fin des étapes d) ou d) et e) ou d) et f) ou d) et e) et f), dans l'étape g) ou **en ce que** l'appareil est conçu de manière telle que les étapes a) à d) ou a) à e) ou a) à f) sont réalisées dans des conditions de salle blanche et/ou climatisées.

12. Appareil selon la revendication 10 ou 11, **caractérisé en ce qu'**il s'agit, pour le dispositif pour la mise à disposition du substrat, d'une extrudeuse, de préférence d'une extrudeuse monovis et **en ce que** l'appareil est conçu de manière telle que le composite formé après la réunion du substrat, du matériau de revêtement et de la feuille de recouvrement est pressé dans un dispositif de laminage ou entre des cylindres de pressage, de préférence entre au moins deux cylindres, de préférence entre des cylindres présentant une dureté Shore A de 30 à 100 et **en ce que** l'appareil comprend un contrôle optique en ligne de la qualité, de préférence sous forme d'un système de caméra et de détection pour des défauts optiques, qui est de préférence disposé de manière telle que le contrôle de la qualité est réalisé dans l'étape f) après la fin des étapes d) ou e).

13. Appareil selon l'une quelconque des revendications 10 à 12, **caractérisé en ce qu'**il s'agit, pour le dispositif pour la mise à disposition du substrat, d'une extrudeuse, de préférence d'une extrudeuse monovis et **en ce que** l'appareil comprend un dispositif de chauffage approprié, de préférence un émetteur d'IR, par lequel le substrat est chauffé avant le premier contact avec le matériau de revêtement ou l'adhésif, de telle sorte que la température de contact selon la revendication 1 est atteinte et **en ce que** l'appareil comprend un dispositif de nettoyage approprié, de préférence des cylindres adhésifs et/ou des systèmes à brosse et/ou un prétraitement au Corona et/ou des dispositifs pour souffler de l'air ionisé, par lequel au moins la surface du substrat ou de la feuille de recouvrement orientée vers le matériau de revêtement ou l'adhésif est nettoyée avant le premier contact avec le matériau de revêtement ou l'adhésif et **en ce que** l'appareil est conçu de manière telle que le matériau de revêtement ou l'adhésif est d'abord appliqué sur la feuille de recouvrement puis assemblé avec le substrat, et **en ce que** l'appareil est conçu de manière telle que le composite formé après la réunion du substrat, du matériau de revêtement et de la feuille de recouvrement est pressé dans un dispositif de laminage ou entre des cylindres de pressage, de préférence entre au moins deux cylindres, de préférence entre des cylindres présentant une dureté Shore A de 30 à 100 et **en ce que** l'appareil est conçu de manière telle que la feuille sacrificielle utilisée comme feuille de recouvrement est retirée après la première ou une autre étape de durcissement par rayonnement, de préférence une étape de durcissement aux UV et **en ce que** l'appareil comprend un contrôle optique en ligne de la qualité, de préférence sous forme d'un système de caméra et de détection pour des défauts optiques, qui est de préférence disposé de manière telle que le contrôle de la qualité est réalisé dans l'étape f) après la fin des étapes d) ou e) et **en ce que** l'appareil est conçu de manière telle qu'au moins une surface du produit obtenu est revêtue d'une feuille de protection pouvant être retirée, le dispositif de revêtement par la feuille de protection étant de préférence disposé de manière telle qu'en fonction de l'élimination de la feuille de recouvrement ou de la fabrication d'un stratifié, la feuille de protection est appliquée après la fin des étapes d) ou d) et e) ou d) et f) ou d) et e) et f), dans l'étape g) et **en ce que** l'appareil est conçu de manière telle que les étapes a) à d) ou a) à e) ou a) à f) sont réalisées dans des conditions de salle blanche et/ou climatisées.

14. Appareil selon l'une quelconque des revendications 10 à 13, **caractérisé en ce que** les sources de rayonnement, de préférence les sources d'UV, sont disposées dans l'appareil de manière telle que lors de l'utilisation d'une feuille sacrificielle, au moins une étape de durcissement par rayonnement, de préférence au moins une étape de durcissement aux UV, est réalisée au travers de la feuille de recouvrement et/ou du substrat et au moins une étape de durcissement par rayonnement, de préférence au moins une étape de durcissement aux UV, est réalisée après l'élimination de la feuille de recouvrement ou **en ce que** l'appareil comprend une source de chaleur pour initier la première étape de durcissement ou **en ce que** l'appareil comprend au moins deux sources de rayonnement, de préférence au moins deux sources d'UV, présentant des énergies introduites différentes des sources de rayonnement ou au moins deux sources d'UV présentant des longueurs d'onde différentes de la lumière UV.

15. Appareil selon l'une quelconque des revendications 10 à 14, **caractérisé en ce que** l'appareil est conçu de manière telle que, dans le cas de la réalisation de la première étape de durcissement par durcissement par rayonnement, de préférence par durcissement aux UV, le temps de dissolution est régulé par la vitesse de transport du substrat ou par le positionnement de la 1ère source de rayonnement, de préférence de la 1ère source d'UV par rapport au site du 1er contact du matériau de revêtement ou de l'adhésif avec le substrat, de préférence de manière telle que le temps de dissolution peut être varié dans la plage de plus de 10 s, de préférence de 15 à 240 s, de manière particulièrement préférée de 20 à 180 s et de manière tout particulièrement préférée de 30 à 120 s, et/ou **en ce que** l'appareil est conçu de manière telle que la vitesse de transport de substrat se situe dans la plage de 0,1 m/min à 10 m/min.

16. Appareil selon l'une quelconque des revendications 10 à 15, **caractérisé en ce qu'**on met à disposition un substrat d'une épaisseur de 10 µm à 500 mm, de préférence de 20 µm à 100 mm, de manière particulièrement préférée de 30 µm à 50 mm, de manière tout particulièrement préférée de 50 µm à 25 mm.

17. Matériau composite comprenant une couche de recouvrement et un substrat ou un substrat, une couche adhésive et une autre couche disposée sur la couche adhésive, **caractérisé en ce qu'**il existe dans la couche de recouvrement ou adhésive une limite de phase entre une phase externe, présentant une faible proportion de polymère de substrat dissous, et une phase mixte, présentant une proportion de polymère de substrat dissous augmentée par rapport à la phase externe et **en ce qu'**il présente une limite de phase entre la phase mixte et le substrat.

18. Matériau composite selon la revendication 17, **caractérisé en ce que** l'épaisseur de la face externe représente entre 30 et 95%, de manière particulièrement préférée entre 40 et 90% et de manière tout particulièrement préférée entre 50 et 80% de l'épaisseur totale de la couche de recouvrement ou adhésive et l'épaisseur de la phase mixte correspond à entre 70 et 5%, de préférence entre 60 et 10% et de manière tout particulièrement préférée entre 50 et 20%, les deux phases formant au total 100% de l'épaisseur de couche totale de la couche de recouvrement ou adhésive.
